# EUROPÄISCHE PATENTSCHRIFT

(11) **EP 2 087 392 B1**
(45) Veröffentlichungstag und Bekanntmachung des Hinweises auf die Patenterteilung: **10.01.2018**
(21) Anmeldenummer: 07801320.8
(22) Anmeldetag: 07.09.2007
(51) Int. Cl.: G02B 21/02, G02B 21/24, G02B 27/00, G02B 21/33

(54) **VERFAHREN ZUM BETREIBEN EINES IMMERSIONSOBJEKTIVS**
METHOD OF USING AN IMMERSION OBJECTIVE
PROCÉDÉ D'UTILISATION D'UN OBJECTIF À IMMERSION

(30) Priorität: 07.09.2006 DE 102006042499; 07.09.2006 DE 102006042088
(43) Veröffentlichungstag der Anmeldung: 12.08.2009
(73) Patentinhaber: Leica Microsystems CMS GmbH, 35578 Wetzlar (DE); EMBL (European Molecular Biology Laboratory), 69117 Heidelberg (DE)
(72) Erfinder: LIEBEL, Urban, 69234 Dielheim-Horrenberg (DE); WINKLER, Siegfried, 69124 Heidelberg (DE); SIECKMANN, Frank, 44879 Bochum (DE)
(74) Vertreter: Patent- und Rechtsanwälte Ullrich & Naumann
(86) Internationale Anmeldenummer: PCT/DE2007/001583
(87) Internationale Veröffentlichungsnummer: WO 2008/028475

(56) Entgegenhaltungen:
- WO-A-2005/010591
- WO-A-2005/078503
- WO-A-2006/009212
- DE-A1- 4 417 079
- JP-A- 2005 227 098
- JP-A- 2005 234 457
- US-A- 3 837 731
- US-A- 5 719 700
- US-A1- 2006 050 351
- US-B1- 6 413 252

## Beschreibung

Die Erfindung betrifft ein Verfahren gemäß Oberbegriff von Anspruch 1.

Des Weiteren sind eine Vorrichtung und ein Verfahren zum Ausbilden eines Immersionsfilms aus einer Immersionsflüssigkeit zwischen einer Linse eines Mikroskopobjektivs und einem Probenträger beschrieben.

Immersionsobjektive der gattungsbildenden Art sind seit langem aus der Praxis bekannt. Solchen Objektiven liegt die Idee zugrunde, dass sich die Bildqualität hinsichtlich Lichtstärke und Auflösung durch optimale Ausnutzung des sogenannten Öffnungswinkels eines Objektivs nutzen lässt. Um eine optimale Ausnutzung der im zu analysierenden Licht verfügbaren Informationen zu erreichen, verwendet man meist Immersionsflüssigkeiten, die den optischen Übergang zwischen einem Präparat und dem Objektiv verbessern. Durch die Immersionsflüssigkeit wird der Gesamtbrechungsindex der Objektivlinse vergrößert und damit deren numerische Apertur, die sich aus dem Sinus des halben Öffnungswinkels und dem Brechungsindex der Immersionsflüssigkeit berechnen lässt.

Immersionsflüssigkeiten sind Flüssigkeiten, deren Brechnungsindex nahe an dem Brechungsindex des Glases liegt, welches für Probenträger und Linsen verwendet wird. Wenn ein Luftspalt zwischen einer Eintritts- oder Austrittslinse eines Mikroskopobjektivs (im folgenden kurz "Objektivlinse" genannt) und einem Probenträger mit solch einer Immersionsflüssigkeit gefüllt wird, erhöht sich die numerische Apertur des Objektivs. Dies führt zum einen zu einer erhöhten Lichtstärke und gestattet außerdem ein erhöhtes Auflösungsvermögen des Objektivs.

Als Immersionsmedien werden vorzugsweise Flüssigkeiten verwendet, beispielsweise Wasser, Öl oder Glyzerin. Auch kommen Flüssigkeiten mit stofflichen Zusätzen in Frage, wie beispielsweise Koffein, um den Bakterienbefall in Wasser zu vermindern. Auch werden Tenside eingesetzt. Immersionsgase lassen sich ebenso verwenden. Im Falle der Verwendung von Immersionsgasen lässt man diese mit einer gewissen Temperatur und Strömungsgeschwindigkeit kontinuierlich zwischen der Objektivlinse und dem Objektivträger bzw. dem Objekt hindurchströmen.

Je nach Brechungsindex des Immersionsmediums lässt sich eine mehr oder weniger perfekte optische Anpassung an die Brechungsindexe der Objektivlinsen und der Objektivträger, die üblicherweise aus Glas hergestellt sind, erreichen. Im Falle einer solchen "perfekten" Anpassung sind die sonst üblichen Lichtverluste, die durch Brechung und/oder Totalreflexion an dem Objektträger ausgelöst werden, nahezu insgesamt eliminiert, zumindest aber ganz erheblich vermindert. In der Praxis werden die zu verwendenden Objektive, sogenannte Immersionsobjektive, auf die Verwendung bestimmter Immersionsflüssigkeiten hin optimiert. So unterscheidet man zwischen Öl-Objektiven, bei denen ein Öl als Immersionsmedium verwendet wird, zwischen Wasser-Objektiven, bei denen als Immersionsmedium Wasser verwendet wird, nämlich beispielsweise für die Untersuchung von wasserhaltigen Präparaten, wie beispielsweise lebenden Zellen, und zwischen Glyzerin-Objektiven, bei denen das Immersionsmedium ein Glyzerin ist, welches den Einbettmedium eines entsprechenden Präparats ähnelt.

Immersionsflüssigkeiten werden meist in Gruppen zusammengefasst, nämlich in Bezug auf unterschiedliche Mischungen, die sich dadurch auszeichnen, dass sich durch Mischung unterschiedlicher Flüssigkeiten der optische Brechungsindex des Immersionsmediums variieren und somit einstellen lässt.

Bei der Verwendung von Immersionsflüssigkeit ist wesentlich, dass sich diese zwischen dem Objektiv bzw. der äußeren Linse und dem Präparat bzw. dem Objektträgerglas, befinden muss, um die optische Anpassung beider Komponenten aufeinander zu erreichen. Immersionsflüssigkeit wird üblicherweise kurz vor dem eigentlichen Experiment auf die Objektivlinse und/oder auf den Objektträger aufgebracht.

Üblicherweise wird die Immersionsflüssigkeit von Hand mit Hilfe einer Pipette auf die Objektivlinse oder den Probenträger aufgebracht. Dies ist jedoch bei hochauflösenden Mikroskopen schwierig, da bei diesen der Fokus des Objektivs sehr dicht bei der Objektivlinse liegt, beispielsweise in einem Abstand von 0,2 mm davon. Bei hochauflösenden Mikroskopen wird daher der Abstand zwischen der Objektivlinse und dem Probenträger nur Bruchteile eines Millimeters betragen, und es ist nicht ohne weiteres möglich, mit einer Pipette von außen Immersionsflüssigkeit in einen solch engen Spalt einzubringen. Stattdessen muss das Objektiv vor dem Aufbringen der Immersionsflüssigkeit vom Probenträger weg- und danach wieder zum Probenträger hinbewegt werden. Diese Bewegung kann beispielsweise durch Schwenken oder Auf- und Abwärtsfahren des Objektivs realisiert werden. Dadurch wird das Aufbringen der Immersionsflüssigkeit besonders aufwendig.

Eine weitere Schwierigkeit tritt bei automatisierten Mikroskopen auf, bei denen das Objektiv automatisch über den Probenträger gescannt wird, um in kurzer Zeit eine Vielzahl von Proben automatisch untersuchen zu können. Wenn der Probenträger relativ zum Objektiv bewegt wird, kann es sein, dass der Immersionsfilm reißt und das Mikroskop dadurch im Betrieb gestört wird. Außerdem werden automatisierte Mikroskope verwendet, um Bilder von Proben, beispielsweise von lebenden Zellen, über einen langen Zeitraum aufzunehmen. In diesem Fall wird das Immersionmedium teilweise verdunsten, und es muss daher von Zeit zu Zeit erneuert werden, was ebenfalls aufwendig ist, wenn dies von Hand geschieht.

Gerade bei automatisierten Hochleistungsmikroskopen, bei denen die Verwendung eines Immersionsmediums umständlich ist, wäre es aber aufgrund der dadurch erreichbaren verbesserten Bildqualität, insbesondere der erhöhten Lichtstärke und des gesteigerten Auflösungsvermögens besonders vorteilhaft, eine Immersionsflüssigkeit zu verwenden.

Zum druckschriftlichen Stand der Technik sei lediglich beispielhaft verwiesen auf die DE 202 05 080 U1, aus der - für sich gesehen - ein Immersionsobjektiv mit einem Abschirmelement bekannt ist. Genauer gesagt ist dort ein Dichtungsring in Form eines Balgs vorgesehen, der im Bereich zwischen dem Objektiv und dem Objekt angeordnet ist. Er dient zur Aufnahme einer kleinen Menge an Immersionsflüssigkeit und hält diese in dem für den Strahlengang relevanten Bereich. Durch das Abschirmelement wird die Immersionsflüssigkeit an der Stelle gehalten, wo sie erforderlich ist und wird die Verdunstung und somit der "Verbrauch" an Immersionsflüssigkeit auf ein Minimum reduziert.

Des Weiteren wird verwiesen auf die WO 02/093232 A2. Aus dieser Druckschrift ist ebenfalls die Verwendung eines Immersionsobjektivs bekannt, wobei dort eine Zuführeinrichtung zum automatischen Zuführen von Immersionsmedium in den Bereich zwischen die Außenfläche des Probenträgers und die Austrittslinse des Objektivs vorgesehen ist. Im Konkreten umfasst die Zuführeinrichtung ein mit dem Objektiv verbundenes Zuführrohr, welches das Immersionsmedium exakt in den relevanten Bereich fördert. Die dazu erforderliche Mimik nimmt einen ganz erheblichen Bauraum ein und macht es erforderlich, dass sich das Zuführrohr in den Bereich zwischen die Austrittslinse und die Probe bzw. den Probenträger erstreckt. Insoweit ist die bekannte Vorrichtung nicht nur konstruktiv aufwändig, sondern ist deren Verwendung aufgrund des erheblichen Bauraums problematisch, insbesondere dann, wenn mehrere Objektive zur Auswahl bereitzustellen sind, vor allem im Rahmen eines automatischen Betriebs.

Die bekannte Vorrichtung umfasst im Konkreten ein Zufuhrrohr, welches seitlich am Objektiv befestigt ist und durch welches eine Immersionsflüssigkeit in die Nähe der Mitte der Objektivlinse zugeführt wird. Von der Austrittsöffnung des Zufuhrrohres wird die Immersionsflüssigkeit dann durch Kapillarkräfte in den Spalt zwischen der Objektivlinse und dem Probenträger gezogen.

Um sicherzustellen, dass stets genug Immersionsflüssigkeit vorhanden ist, wird diese bei der bekannten Vorrichtung kontinuierlich im Überfluss zugeführt, und überschüssige Immersionsflüssigkeit wird in einer Auffangrinne, die an einem Objektivkopf des Objektivs vorgesehen ist, gesammelt und mit einer Absaugeinrichtung abgesaugt.

Insbesondere für die automatische Mikroskopie ist es von Vorteil, wenn sich die Auflösungen durch einen schnellen Wechsel der verwendeten Objektive anpassen lassen. Der Objektivwechsel kann dabei manuell oder automatisch erfolgen. Bei keinem der zuvor genannten Systeme ist ein automatischer Wechsel zwischen den Immersionsobjektiven bei gleichzeitiger automatischer Nachführung der Immersionsflüssigkeit möglich.

Außerdem ist es in der Praxis oftmals erforderlich, zwischen unterschiedlichen Immersionsmedien bzw. Immersionsflüssigkeiten, beispielsweise Öl und Wasser, zu wechseln. Während des Umschaltens von einer Immersionsflüssigkeit auf eine andere ist es daher erforderlich, die jeweils verwendete Immersionsflüssigkeit weitestgehend vom Objektiv und Objektivträger zu entfernen. Dies ist bislang ausschließlich manuell möglich gewesen. Die Immersionsflüssigkeit wird meist von Hand oder über eine umständliche Mimik aufgetragen. Dies erfordert eine erhebliche Zeit und der Vorgang des Auftragens bzw. Einbringens von Immersionsflüssigkeit ist ungenau. Außerdem birgt er stets die Gefahr einer Kontamination in sich, zumal einige Immersionsmedien giftig sind. Die manuelle Handhabung der Immersionsmedien ist auch insoweit zu vermeiden.

Wie zuvor ausgeführt, eignen sich die aus der Praxis bekannten Systeme nur bedingt für den praktischen Einsatz in der Mikroskopie. Stets ist zu beachten, dass entsprechende Systeme keine qualitätsmindernden Nachteile aufweisen. Während die Vorkehrung eines Nachfüllstutzens im Spalt zwischen dem Objektiv und dem Objektivträger hinderlich ist, bewirkt ein an dem Objektiv angebrachtes Nachfüllsystem regelmäßig ein auf das Objektiv wirkendes Drehmoment. Im Falle einer Anordnung der Immersionsobjektive in einem Objektivrevolver wird die Drehung des Objektivrevolvers durch entsprechende Nachfüllsysteme behindert. Sämtliche voranstehend genannten Nachteile sind insbesondere beim automatischen Betrieb nicht hinnehmbar.

Des Weiteren sei darauf hingewiesen, dass bei der Verwendung von Immersionsflüssigkeit bestimmte Objektivtypen bevorzugt werden, bei denen die objektträgerseitige Linse, d.h. die Austrittslinse des Objektivs, dem Objektträger am nächsten liegt. In Bezug auf die dortige Oberflächenspannung werden Kapillarkräfte ausgenutzt, um das Immersionsmedium in den Bereich zwischen der äußeren Linse und dem Objekt einzuleiten. Die Nutzung von Kapillarkräften ist von Vorteil, wenngleich diese von zahlreichen Randbedingungen abhängen, so beispielsweise von der Oberflächenspannung der beteiligten Komponenten und Bauteilen, insbesondere von der Oberflächenspannung der Immersionsflüssigkeit und der Grenzflächenspannung der Immersionsflüssigkeit mit der Oberfläche des Objektträgers und der Oberfläche der Austrittslinse. Sind die Oberflächen, mit denen die Immersionsflüssigkeit gut benetzen soll, stark verschmutzt, beispielsweise durch Fingerabdrücke auf den Objektträgern oder durch verharzte Immersionsölreste auf den Objektträgern und/oder auf der Austrittslinse, so ist davon auszugehen, dass die erforderlichen Kapillarkräfte nicht zur Wirkung kommen. Entsprechend besteht die Gefahr, dass der Spalt zwischen der Austrittslinse und dem Objektträger nur unvollständig mit Immersionsöl benetzt wird. Eine nur teilweise Benetzung der insoweit aktiven optischen Flächen mit Immersionsöl wirkt sich auf die zu erzielenden Mikroskopbilder qualitätsmindernd aus.

Ein weiteres qualitätsminderndes Merkmal sind Luftblasen, die in dem Spalt zwischen dem Objektträger und dem Objektiv auftreten können. Durch solche Luftblasen werden die Kapillarkräfte vermindert und wird eine vollständige Benetzung der optischen Flächen mit Immersionsflüssigkeit verhindert. Die Entstehung kleiner Luftblasen wird durch die Verwendung von Füllrohren zur Versorgung des Spalts mit Immersionsflüssigkeit begünstigt. Die Gefahr besteht insbesondere bei größeren Durchströmgeschwindigkeiten, die eine Art Zerstäubungseffekt durch Mitreißen von Luft bewirken.

Ein gattungsbildendes Immersionsobjektiv ist aus der US 3,202,049 bekannt. Dort ist eine ganz besondere Einrichtung zum Zuführen von Immersionsflüssigkeit in den Bereich zwischen dem Objekt bzw. einem Objektträger und der äußeren Linse des Objektivs (Austrittslinse) vorgesehen. Diese Einrichtung umfasst eine den Objektivkörper umschließende, im Bereich der äußeren Linse offene Kappe, die mit einem Innengewinde auf ein Außengewinde des Objektivkörpers aufgeschraubt ist. Die Kappe bildet zur äußeren Linse hin einen Spalt, wobei innerhalb der Kappe ein kleines Reservoir zur Aufnahme von Immersionsflüssigkeit gebildet ist. Die Immersionsflüssigkeit kann über den Spalt aus dem Reservoir austreten.

Die Vorkehrung der Kappe hat den enormen Vorteil, dass diese im Vergleich zu den sonst bekannten Systemen äußerst klein baut, nämlich rotationssymmetrisch um den Objektivkörper angeordnet ist. Sie beinhaltet ein Depot an Immersionsflüssigkeit, welches zum Betrieb des Immersionsobjektivs entsprechend dem darin vorgesehenen Volumen vorgehalten wird.

Das bekannte System nutzt die Schwerkraft und ein manuelles Aufdrehen der Kappe, um nämlich einen Austritt der Immersionsflüssigkeit aus dem zwischen Kappe und Objektiv gebildeten Ringspalt zu bewirken. Entsprechend ist es erforderlich, dass solche Immersionsobjektive ausschließlich in herkömmlicher Weise verwendet werden, nämlich dann, wenn das Objektiv auf die zu untersuchende Probe "sieht". Für die inverse Mikroskopie, wonach das Objektiv von "unten" in den Objektivträger oder auf das Material "sieht", lässt sich das bekannte schwerkraftabhängige Immersionsobjektiv nicht verwenden. Auch ist das bekannte Immersionsobjektiv nicht für die automatische Verwendung mehrere Immersionsobjektive geeignet, zumal ein ständiges manuelles Einstellen der auszubringenden Menge an Immersionsflüssigkeit im automatischen Betrieb nicht möglich ist. Schließlich hat das bekannte Immersionsobjektiv den weiteren Nachteil, dass sich aufgrund ständiger Austritte an Immersionsflüssigkeit größere Mengen Öl auf dem Präparat oder Träger sammeln. Bei der Verwendung von Ölen ist aufgrund der ständigen Verdunstung eine Verharzung nicht zu vermeiden.

Aus der WO 2005/078503 A1 ist ein Verfahren gemäß Oberbegriff des Anspruchs 1 bekannt. Die WO 2005/010591 A1 zeigt eine Vorrichtung und Verfahren zur Untersuchung chemischer und/oder biologischer Proben.

Der vorliegenden Erfindung liegt daher die Aufgabe zugrunde, einerseits ein Verfahren der eingangs genannten Art derart auszugestalten und weiterzubilden, dass eine hinreichend gute Versorgung mit Immersionsmedium über die gesamte Einsatzdauer hinweg erfolgt, wobei der Einsatz im automatischen Betrieb möglich sein soll. Dabei soll sichergestellt sein, dass sich ein Immersionsfilm zwischen der Linse eines Mikroskopobjektivs und einem Probenträger automatisch und zuverlässig ausbildet, selbst wenn das Mikroskopobjektiv und der Probenträger rasch relativ zueinander bewegt werden und/oder wenn Langzeituntersuchungen an einer Probe vorgenommen werden.

Das erfindungsgemäße Verfahren löst die voranstehende Aufgabe durch die Merkmale des Patentanspruchs 1.

In Bezug auf das Objektiv ist erkannt worden, dass sich die die Baugröße betreffenden Probleme bekannter Immersionsobjektive dadurch beheben, zumindest aber reduzieren lassen, dass um das Objektiv herum ein zumindest kleines Depot mit Immersionsflüssigkeit vorgesehen ist. Dieses Depot ist innerhalb einer Kappe gebildet, die sich zumindest im objektseitigen Bereich des Objektivs um den Objektivkörper herum erstreckt. Zwischen der Kappe und dem Objektivkörper befindet sich ein kleines Depot, welches ständig mit Immersionsmedium bzw. Immersionsflüssigkeit versorgt wird. Dazu umfasst die Zuführeinrichtung mindestens einen in der Kappe ausgebildeten Anschluss, über den die ständige Versorgung mit Immersionsmedium stattfindet.

Aufgrund der ständigen Versorgung mit Immersionsmedium ist es möglich, den zwischen der Kappe und den zwischen der Innenwandung der Kappe und der Außenwandung des Objektivkörpers gebildeten Raum so klein wie möglich zu halten, so dass der für das Immersionsobjektiv erforderliche Raum kleinstmöglich ist. Das unter der Kappe gebildete Volumen lässt sich deshalb so klein wie möglich halten, da eine ständige Versorgung der Kappe mit Immersionsflüssigkeit erfolgt, nämlich über den Anschluss. Entsprechend lässt sich unter der Kappe ein steter Überdruck aufbauen, der zum Ausbringen des Immersionsmediums über den Spalt führt. Folglich eignet sich das Immersionsobjektiv auch zur Verwendung in einem inversen Mikroskop, nämlich zur Anordnung des Objektivs unterhalb eines Objekts bzw. eines Objektträgers, so dass das Objektiv von "unten" in den Objektträger bzw. auf das Material sieht. Eine Abhängigkeit von der Schwerkraft, wie dies gemäß US 3,202,049 der Fall ist, ist bei dem hier vorliegenden Immersionsobjektiv nicht gegeben.

Zur gleichmäßigen Versorgung des Bereichs zwischen dem Objekt bzw. dem Objektträger und der äußeren Linse des Objektivs mit Immersionsmedium ist es von Vorteil, wenn der zwischen der Kappe und der Linse gebildete Spalt als rotationssymmetrischer Spalt ausgeführt ist. Im Konkreten kann der Spalt als Ringspalt ausgeführt sein. Eine gleichmäßige Versorgung mit Immersionsmedium im Bereich um die Austrittslinse ist somit gewährleistet.

Des Weiteren ist es denkbar, dass in die Kappe und/oder in den Objektivkörper Kanäle zur Leitung von Immersionsmedium eingearbeitet sind. Durch die Vorkehrung solcher Kanäle lässt sich der Transport von Immersionsflüssigkeit, insbesondere unter Nutzung von Kapillarkräften begünstigen.

Die Kappe ist an einem vorderen, im Querschnitt breiteren Bereich des Objektivkörpers zumindest weitgehend abdichtend befestigt. Dabei ist wesentlich, dass die Befestigung im Bereich des vorderen bzw. oberen, breiteren Objektivhalses erfolgt, so dass der untere, schmalere Objektivhals, der bei Kontakt des Objektivs mit dem Objektivträger eingeschoben wird, weiterhin ungehindert als eine Art Sicherheitspuffer dienen kann.

Im Konkreten ist die Kappe mit einem Verbindungsbereich an dem Objektivkörper befestigt. Der Verbindungsbereich ist integraler Bestandteil der Kappe. Von Vorteil ist es, wenn die Kappe fest und dabei rotationssymmetrisch mit dem Objektiv verbunden ist. Dies kann durch form- und/oder kraftschlüssiges Aufstecken der Kappe mit ihrem Verbindungsbereich auf den Objektivkörper erfolgen. Ebenso ist es denkbar, dass die Kappe mit dem Verbindungsbereich mit dem Objektivkörper verklebt ist. Besonders elegant ist eine Verschraubung der Kappe über deren Verbindungsbereich mit dem Objektivkörper. Im Falle der Verschraubung lässt sich über den Gewindegang eine Justage vornehmen, bzw. ist es möglich, auch im Nachhinein eine exakte Positionierung der Kappe gegenüber der Austrittslinse zur Definition des Spalts vorzunehmen. Grundsätzlich wird der Spalt durch Positionierung der Kappe eingestellt, wobei es sich dabei regelmäßig um eine werkseitige Einstellung handelt. Unter Verwendung einer Schraubverbindung ist die Einstellbarkeit durch den Benutzer gewährleistet.

Die Einstellung des Spaltes dient zur Anpassung an die Viskosität und Oberflächenspannung der jeweiligen Immersionsflüssigkeit. Insoweit ist es denkbar, dass ein Objektiv von vornherein für eine bestimmte Immersionsflüssigkeit eingestellt und somit definiert ist. Die zuvor genannte Einstellbarkeit, die von Seiten des Benutzers möglich ist, ermöglicht die Anpassung an unterschiedliche Immersionsmedien. Jedenfalls sollte der Spalt derart eingestellt sein oder eingestellt werden, dass das Immersionsmedium ohne Druckbeaufschlagung nicht aus dem Spalt austritt, so dass eine unnötige Verdunstung von Immersionsflüssigkeit, insbesondere ein Verharzen im Randbereich, wirksam vermieden, zumindest aber ganz erheblich reduziert ist.

Der zur Verbindung mit dem Objektivkörper dienende Verbindungsbereich kann als massiver Ring ausgeführt sein, der integraler Bestandteil der Kappe ist. Insoweit lässt sich eine besonders stabile Verbindung mit dem Objektiv herstellen.

In ganz besonders vorteilhafter Weise ist es möglich, dass der Verbindungsbereich als umlaufender Ringkanal mit einer unmittelbar den Objektivkörper kontaktierenden Innenwandung ausgeführt ist. Im Rahmen einer solchen Ausgestaltung könnte der Anschluss auf der der Austrittslinse gegenüberliegenden - rückwärtigen - Seite der Kappe erfolgen, nämlich über den dort gebildeten Ringkanal, der mit entsprechenden Anschlussstutzen ausgestattet sein kann. Ein kleinstmöglicher Bauraum ließe sich dadurch realisieren.

Der insgesamt erforderliche Bauraum lässt sich insbesondere dadurch so klein wie möglich halten, dass die Kappe in etwa der Kontur des Objektivs bzw. des Objektivkörpers angepasst ist. Da die Kappe ständig mit Immersionsflüssigkeit versorgt wird, lässt sich der innerhalb der Kappe gebildete Raum für das Immersionsmedium so klein wie möglich halten. Letztendlich reicht ein umlaufender Ringkanal aus, sofern eine ständige Versorgung mit Immersionsmedium von außerhalb der Kappe erfolgt.

Bereits zuvor ist erwähnt worden, dass an der Kappe zumindest ein Anschluss zum Ein- und/oder Ausleiten von Immersionsmedium vorgesehen ist. In besonders vorteilhafter Weise sind an einer Kappe zwei Anschlüsse zum Ein- und/oder Ausleiten desselben Immersionsmediums oder unterschiedlicher Immersionsmedien vorgesehen, so dass beispielsweise eine wechselweise Versorgung mit unterschiedlichen Immersionsflüssigkeiten erfolgen kann. Auch ist es denkbar, dass über den einen Anschluss das Immersionsmedium eingeleitet und über den anderen Anschluss nicht mehr erforderliches Immersionsmedium abgesaugt wird. Auch ist es denkbar, dass über den einen oder anderen Anschluss - je nach Wahl - Druckluft eingeblasen wird, um nämlich den Kanal innerhalb der Kappe und den vorzugsweise ringförmigen Austritt von überschüssigem Immersionsmedium zu befreien.

Wie ebenfalls bereits zuvor erwähnt, kann der Anschluss bzw. können die Anschlüsse auf der der äußeren Linse abgewandten Seite der Kappe ausgebildet sein. Ebenso ist es möglich, dass der Anschluss bzw. die Anschlüsse seitlich in der Kappe ausgebildet ist bzw. sind. Hier ist auf die insgesamt zu realisierende Anordnung und den vorhandenen Bauraum zu achten.

In besonders vorteilhafter Weise sind die Anschlüssen in Form von Anschlussstutzen ausgeführt. Diese sind über eine Leitung, insbesondere über einen Schlauch, mit einem Immersionsflüssigkeit enthaltenden Reservoir verbunden. Des Weiteren kann einer der Anschlüsse ebenfalls über eine Leitung, insbesondere über einen Schlauch, mit einem eine Spül-/Reinigungsflüssigkeit enthaltenden Reservoir verbunden sein. Weiter ist es von Vorteil, wenn die Kappe entsprechend den Erfordernissen einerseits mit Immersionsflüssigkeit und andererseits mit einer Spül-/Reinigungsflüssigkeit versorgbar ist, um nämlich nicht nur einen automatischen Betrieb der Mikroskopie, sondern auch ein anschließendes automatisches Reinigen zu bewerkstelligen. Ein Umschalten auf ein anderes Immersionsmedium ist nach der Reinigung möglich.

Die zur Aufnahme von Immersionsflüssigkeit und gegebenenfalls einer Spül-/Reinigungsflüssigkeit dienenden Reservoirs sind nachfüllbar und/oder insgesamt austauschbar, beispielsweise im Sinne einer nachfüllbaren oder austauschbaren Kartusche. Ein unmittelbares Aufstecken des Reservoirs auf bzw. an das Objektiv ist denkbar. Eine Anbringung des Reservoirs abseits vom Objektiv ist unter Zugrundelegung einer Schlauchverbindung zwischen dem Reservoir und dem jeweiligen Anschlussstutzen ebenfalls möglich.

Zum Fördern der Immersionsflüssigkeit und/oder der Spül-/Reinigungsflüssigkeit ist mindestens eine Pumpe vorgesehen, wobei es sich dabei in ganz besonders vorteilhafter Weise um eine Dosierpumpe handelt. Die Pumpe ermöglicht das Aufbringen eines zumindest geringen Überdrucks innerhalb des Reservoirs und/oder innerhalb der Schlauchleitung und/oder innerhalb der Kappe, so dass die Immersionsflüssigkeit bei Aktivierung der Pumpe aus dem Ringspalt austritt.

In weiter vorteilhafter Weise ist eine Heizeinrichtung zum Erwärmen der Immersionsflüssigkeit und/oder der Spül-/Reinigungsflüssigkeit vorgesehen. In Bezug auf die Immersionsflüssigkeit ist es möglich, deren Viskosität und Oberflächenspannung durch Temperatur zu verändern, so dass auch insoweit eine optimale Anpassung möglich ist. Ein Temperieren der Spül-/Reinigungsflüssigkeit begünstigt den Reinigungsprozess.

In weiter vorteilhafter Weise ist der Anschluss bzw. sind die Anschlüsse über eine Leitung, insbesondere über einen Schlauch, mit einem Immersionsflüssigkeit und/oder Spül-/Reinigungsflüssigkeit aufnehmenden Sammelbehälter verbunden. In diesen Sammelbehälter hinein lässt sich nicht mehr benötigte Immersionsflüssigkeit einerseits und Spül-/Reinigungsflüssigkeit andererseits hineinsaugen. Auch durch diese Maßnahme wird der automatische Betrieb der Mikroskopie begünstigt.

In ganz besonders vorteilhafter Weise sind mehrere mit Kappen ausgestattete Objektive in einer Baugruppe zusammengefasst. Dabei kann es sich um einen vorzugsweise rotationssymmetrisch ausgebildeten Objektivrevolver handeln. Die Objektive sollten dabei derart in den Objektivrevolver eingeschraubt sein, dass die Anschlüsse entsprechend ihrer Anordnung und Ausrichtung nach Innen gerichtet sind. Eine Behinderung der Drehbewegung des Objektivrevolvers ist dadurch vermieden.

Im Rahmen einer Anordnung der Objektive in einem Objektivrevolver ist es denkbar, dass jedem der Objektive mindestens ein Reservoir für Immersionsflüssigkeit und/oder für Spül-/Reinigungsflüssigkeit zugeordnet ist. Ebenso ist ein zentrales Reservoir denkbar, wonach der Objektivrevolver mindestens ein Reservoir zum Bereitstellen von Immersionsflüssigkeit und/oder von Spül-/Reinigungsflüssigkeit und/oder einen Sammelbehälter zur Aufnahme von Immersionsflüssigkeit und/oder Spül-Reinigungsflüssigkeit trägt. Ein solches Reservoir bzw. solche Reservoirs könnten im bzw. am oder auf dem Objektivrevolver angeordnet sein oder könnten in den Objektivrevolver integriert sein.

Entsprechend befindet sich auf oder in dem Objektivrevolver mindestens eine Pumpe, vorzugsweise in Form einer Mikropumpe, zum Fördern von Fluidum, so dass der Objektivrevolver in soweit autark arbeitet.

Gleiches gilt für die Vorkehrung einer Steuerung zur Dosierung der Immersionsflüssigkeit und/oder der Spül-/Reinigungsflüssigkeit. Die Steuerung könnte in etwa mittig auf, an oder in dem Objektivrevolver angeordnet sein. Ebenso ist es denkbar, dass die Steuerung einen Mikrokontroller zur Steuerung des gesamten Ablaufs der Versorgung des Objektivs mit unterschiedlichen Medien und/oder der Reihenfolge gewünschter Objektivwechsel umfasst.

Des Weiteren ist es denkbar, dass der Mikrokontroller externe Steuersignale empfängt und in Bezug auf vollzogene Verfahrensschritte entsprechende Signale an eine externe Einheit aussendet. Ebenfalls könnte ein externes elektronisches Steuerinterface zur Steuerung des gesamten Ablaufs vorgesehen sein.

In weiter vorteilhafter Weise ist dem Objektivrevolver eine Elektronik zum Senden und Empfangen von Steuersignalen zugeordnet, die zum Abfragen von Sensoren und zum Ansteuern der Pumpe bzw. Pumpen dient. Mittels der Sensoren lässt sich des Weiteren der Füllstand in den Reservoirs detektieren. Ebenso ist es denkbar und von besonderem Vorteil, dass mittels einer Sensorik die jeweils aktuelle Menge an Immersionsflüssigkeit unmittelbar am Objektiv detektiert wird. Die Detektion könnte im Konkreten mittels kapazitiver Sensoren erfolgen, wobei eine Änderung im Dielektrikum (in Form des Immersionsmediums) als Messgröße dient.

Zur individuellen Versorgung eines jeweiligen Objektivs sind des Weiteren Ventile, vorzugsweise in Form von Mikroventilen, vorgesehen. Diese Ventile können der jeweiligen Leitung oder unmittelbar der jeweiligen Kappe zugeordnet sein.

In weiter vorteilhafter Weise umfasst der Objektivrevolver eine eigene Energieversorgung, wobei es sich dabei um einen Akkumulator oder um eine Batterie handeln kann. Auch ist es denkbar, dass die Energieversorgung ein Stromversorgungskabel zum Mikroskop umfasst, wobei vorzugsweise über einen Schleifkontakt eine elektrische Verbindung hergestellt ist.

Die zuvor genannten Bausteine bzw. funktionalen Einheiten, die dem Objektivrevolver zugeordnet sind bzw. zugeordnet sein können, können zu einer Art monolithischen Funktionsgruppe zusammengefasst sein, nämlich zu einer in einem Gehäuse angeordneten Funktionsgruppe, die wiederum auf dem Objektivrevolver, dort vorzugsweise mittig zwischen den Objektiven, befestigt bzw. angeordnet ist.

Insbesondere zur Verwendung im Rahmen der 4Pi-Mikroskopie ist es von Vorteil, wenn gleichzeitig zwei Objektive zum Betrieb auswählbar und mit Immersionsflüssigkeit versorgbar sind. Auch insoweit lässt sich das Anwendungsspektrum des hier vorliegenden Objektivs im Rahmen einer besonderen Anordnung ganz erheblich erweitern.

Je nach Situation im Bereich zwischen der äußeren Linse des Objektivs und dem Objektivträger bzw. dem Objekt kann es erforderlich sein, weiterführende Maßnahmen zum Einbringen der Immersionsflüssigkeit zu ergreifen. Im Handbetrieb bewegt man dazu das Objektiv gegenüber dem Objektivträger, um nämlich die Immersionsflüssigkeit regelrecht in den Zwischenbereich einzuschlämmen. Im Rahmen eines automatischen Betriebes ist es von Vorteil, wenn das im Einsatz befindliche Objektiv beim Zuführen oder Vorhandensein von Immersionsflüssigkeit gegenüber dem Objekt oder dem Objektträger, wahlweise langsam oder schnell, bewegt werden kann. Eine solche Bewegung begünstigt die Benetzung mit der Immersionsflüssigkeit. Auch ist es denkbar, dass die Immersionsflüssigkeit mit Schallwellen beaufschlagt wird, nämlich ebenfalls zur Begünstigung der Benetzung zwischen den jeweiligen Komponenten.

Zum Zwecke der Reinigung lässt sich eine weitere Maßnahme unter Begünstigung eines automatischen Betriebs realisieren, nämlich eine Maßnahme, wonach der Kanal und/oder der Bereich zwischen dem Objektiv und dem Objektträger oder dem Objekt mittels Druckluft ausblasbar ist. Gleiches gilt für den Anschlussstutzen bzw. für die Leitung, die nämlich ebenfalls mittels Druckluft ausblasbar und insoweit reinigbar sind. Der wechselweise Einsatz unterschiedlicher Immersionsmedien ist danach möglich. Die zum Ausblasen erforderliche Druckluft kann über ein Druckbehältnis, vorzugsweise über eine Druckluftpatrone, oder über einen Druckluftgenerator bereitgestellt werden. Dazu sei angemerkt, dass es sich bei dem zur Reinigung dienenden Medium nicht unbedingt um komprimierte Luft, sondern vielmehr um jedwedes Gas, beispielsweise um ein Inertgas, handeln kann. Ebenso ist der Einsatz eines Gases denkbar, der bestimmte Substanzen bindet bzw. neutralisiert.

Des Weiteren ist eine Vorrichtung zum Ausbilden eines Immersionsfilms aus einer Immersionsflüssigkeit zwischen einer Linse, eines Mikroskopobjektivs und einem Probenträger angegeben, die ein objektivfestes Element umfasst, das einen Immersionsfilmbereich definiert, in dem der Immersionsfilm auszubilden ist, eine Sensoreinrichtung, die geeignet ist, die Beschaffenheit des Immersionsfilms im Immersionsfilmbereich zu detektieren, eine Zuführvorrichtung zum Zuführen von Immersionsflüssigkeit in den Immersionsfilmbereich und Mittel zum Steuern oder Regeln der Zufuhr von Immersionsflüssigkeit in Abhängigkeit von der Detektion durch die Sensoreinrichtung.

Anders als beim eingangs genannten Stand der Technik, bei dem die Immersionsflüssigkeit durch das Zufuhrrohr an einem Punkt in der Nähe der Objektivlinse zugeführt wird und im wesentlichen darauf vertraut wird, dass sich durch die Kapillarkräfte ein ausreichender Immersionsfilm zwischen dem Mikroskopobjektiv und dem Probenträger ausbildet, umfasst die Vorrichtung ein objektivfestes Element, welches einen Immersionsfilmbereich definiert, in dem der Immersionsfilm auszubilden ist. Die Beschaffenheit des Immersionsfilms in diesem Immersionsfilmbereich wird durch die Sensoreinrichtung detektiert. Dabei ist mit der "Beschaffenheit" des Immersionsfilms nicht eine Vielzahl von detaillierten Eigenschaften des Immersionsfilms gemeint. Vielmehr kommt es darauf an, dass festgestellt werden kann, ob ein für die Zwecke der Immersionsmikroskopie ausreichender Immersionsfilm im Immersionsfilmbereich vorliegt. Wenn beispielsweise mit Hilfe der Sensoreinrichtung festgestellt wird, dass der Immersionsfilm im Immersionsfilmbereich dünn wird oder zu reißen beginnt, kann mit Hilfe der Mittel zum Steuern oder Regeln die Zufuhr von zusätzlicher Immersionsflüssigkeit veranlasst werden.

Der Immersionsfilm zwischen dem Probenträger und der Objektivlinse ist nicht auf den Immersionsfilmbereich beschränkt, sondern kann sich beispielsweise durch Kapillarkräfte auch über diesen hinaus ausdehnen. Der Immersionsfilmbereich ist jedoch der Bereich, in dem die Beschaffenheit des Immersionsfilms mit Hilfe der Sensoreinrichtung überprüft wird. Da der Immersionsfilmbereich in einem objektivfesten Element vorgesehen ist, hat er darüber hinaus den weiteren nützlichen Effekt, dass er das Mitführen des Immersionsfilms unterstützt, wenn die Probe relativ zum Objektiv bewegt wird, wie unten anhand eines Ausführungsbeispiels näher erläutert wird.

In einer vorteilhaften Ausführungsform ist das objektivfeste Element als Adapter ausgebildet, der geeignet ist, an einem Mikroskopobjektiv befestigt zu werden. Ein derartiger Adapter kann leicht bei bereits vorhandenen Mikroskopen nachgerüstet werden, bei denen gegenwärtig ohne Immersionsflüssigkeit gearbeitet wird oder die Immersionsflüssigkeit mit der Hand aufgetragen wird.

In einer vorteilhaften Ausführungsform detektiert die Sensoreinrichtung die Beschaffenheit des Immersionsfilms basierend auf dessen elektrischer Leitfähigkeit. Beispielsweise kann die elektrische Leitfähigkeit in einer Richtung quer zur Dickenrichtung des Immersionsfilms über einen Abschnitt des Immersionsfilmbereichs gemessen werden. Falls die Dicke des Immersionsfilms stellenweise abnimmt, kann dies durch eine Abnahme der Leitfähigkeit detektiert werden. In einer vorteilhaften Weiterbildung veranlassen die Mittel zum Steuern oder Regeln die Zufuhr von Immersionsflüssigkeit, wenn die Leitfähigkeit des Immersionsfilms in einer Richtung quer zu dessen Dickenrichtung einen unteren Schwellenwert unterschreitet, und sie beenden die Zufuhr von Immersionsflüssigkeit, wenn die besagte Leitfähigkeit einen oberen Schwellenwert übersteigt.

Die soeben beschriebene Ausführungsform setzt jedoch ein leitfähiges Immersionsmedium voraus. Die Erfinder haben festgestellt, dass die Leitfähigkeit von sogenanntem vollentsalztem Wasser für die oben beschriebene Detektion ausreicht. Falls jedoch noch reineres Wasser oder eine andere, nichtleitende Immersionsflüssigkeit verwendet werden soll, muss die Sensoreinrichtung auf andere Eigenschaften des Immersionsfilms ansprechen. Beispielsweise kann die Sensoreinrichtung in einer alternativen Ausführungsform die Beschaffenheit des Immersionsfilms basierend auf dessen induktiver und/oder kapazitiver Wirkung in einem elektromagnetischen Wechselfeld detektieren.

In einer vorteilhaften Weiterbildung umfasst die Sensoreinrichtung ferner eine Vorrichtung zum Messen der Temperatur der Immersionsflüssigkeit. Durch die Temperatur können die Messwerte der Sensoreinrichtung korrigiert bzw. skaliert werden. Beispielsweise ist die Leitfähigkeit von Flüssigkeiten abhängig von deren Temperatur. Um von einer gemessenen Leitfähigkeit noch zuverlässiger auf die Beschaffenheit des Immersionsfilms schließen zu können, ist es vorteilhaft, die Temperatur ebenfalls zu erfassen und die temperaturbedingten Einflüsse auf das Messergebnis zu kompensieren bzw. herauszurechnen.

In einer besonders vorteilhaften Weiterbildung umfasst das objektivfeste Element eine Platte und ist der Immersionsfilmbereich durch eine Aussparung in der Platte gebildet. Da die Platte objektivfest ist, wird der Immersionsfilm in der Aussparung der Platte und somit im Bereich der Objektivlinse gehalten, wenn der Probenträger relativ zum Objektiv bewegt wird, wie dies beispielsweise beim Probenscannen bzw. sogenanntem "Screening" der Fall ist. Dies ist eine deutliche Verbesserung gegenüber einer Ausführung, in der der Immersionsfilm lediglich durch Kapillarkraft zwischen der Objektivlinse und dem Probenträger gehalten wird.

Vorzugsweise besteht die Platte aus einem elektrisch nicht leitenden Material, insbesondere Kunststoff, einer Keramik oder Teflon. Besonders vorteilhaft ist eine Platte, die aus einem Platinenwerkstoff, insbesondere aus Glasfasergewebe und Epoxidharz besteht. Derartige Platinenplatten sind Massenprodukte und daher preiswert erhältlich. Außerdem können Elektroden und/oder Leitungen der Sensoreinrichtung einfach auf herkömmliche Weise auf Platinenplatten ausgebildet werden.

In einer vorteilhaften Weiterbildung umfasst die Zufuhrvorrichtung einen Kanal, der in der Platte ausgebildet ist und mit der Aussparung kommuniziert. Der Kanal kann durch einen Graben in der Platte gebildet sein, der mit einer weiteren Platte abgedeckt ist. Durch die Integration des Kanals in der Platte ergibt sich eine sehr flache Bauform, die besonders bei Hochleistungsmikroskopen vorteilhaft ist, bei denen ein sehr geringer Abstand zwischen dem Objektiv und dem Probenträger eingehalten werden muss.

In einer vorteilhaften Weiterbildung ist die Zufuhrvorrichtung in ihrer Förderrichtung umkehrbar, so dass Immersionsflüssigkeit aus dem Immersionsfilmbereich abgeführt werden kann. Dies kann beispielsweise vorteilhaft sein, um die Immersionsflüssigkeit abzusaugen, wenn mit Hilfe der Sensoreinrichtung festgestellt wird, dass zu viel Immersionsflüssigkeit zugeführt wurde. Zusätzlich oder alternativ kann die Förderrichtung umgekehrt werden, um einen Großteil der Immersionsflüssigkeit abzusaugen, bevor das Objektiv vom Probenträger entfernt wird, um eine Verschmutzung des Mikroskops mit Immersionsflüssigkeit zu verhindern.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht, geschnitten, ein erstes Ausführungsbeispiel eines Immersionsobjektivs in inverser Anordnung,
- Fig. 2: in einer vergrößerten Ansicht, teilweise, den Gegenstand aus Fig. 1,
- Fig. 3: in einer schematischen Draufsicht einen Objektivrevolver mit zwei eingesetzten Immersionsobjektiven,
- Fig. 4: in einer schematischen Draufsicht den Gegenstand aus Fig. 3, ergänzt um ein dort mittig angeordnetes Steuerungs- und Vorratssystem,
- Fig. 5a: in einer schematischen Ansicht, geschnitten, ein weiteres Ausführungsbeispiel eines Immersionsobjektivs,
- Fig. 5b: in einer schematischen Draufsicht den Gegenstand aus Fig. 5a,
- Fig. 6a: in einer schematischen Ansicht, geschnitten, ein weiteres Ausführungsbeispiel eines Immersionsobjektivs,
- Fig. 6b: in einer schematischen Draufsicht den Gegenstand aus Fig. 6a,
- Fig. 7a: in einer schematischen Ansicht, geschnitten, ein weiteres Ausführungsbeispiel eines Immersionsobjektivs,
- Fig. 7b: in einer schematischen Draufsicht den Gegenstand aus Fig. 7a,
- Fig. 8a: in einer schematischen Ansicht, geschnitten, ein weiteres Ausführungsbeispiel eines Immersionsobjektivs,
- Fig. 8b: in einer schematischen Draufsicht den Gegenstand aus Fig. 8a,
- Fig. 9a: in einer schematischen Ansicht, teilweise, einen Objektivrevolver mit Immersionsobjektiven nebst Elektronik, Pumpen und Reservoir als integrierte Funktionsgruppe.
- Fig. 9b: in einer schematischen Draufsicht den Gegenstand aus Fig. 9a,
- Fig. 10a: in einer schematischen Ansicht, teilweise, ein weiteres Ausführungsbeispiel eines Objektivrevolvers mit Immersionsobjektiven nebst Elektronik, Pumpen und Reservoir als integrierte Funktionsgruppe,
- Fig. 10b: in einer schematischen Ansicht den Gegenstand aus Fig. 10a im Detail, wobei dort lediglich ein Immersionsobjektiv mit der zur Versorgung und Steuerung dienenden Funktionsgruppe gezeigt ist,
- Fig. 10c: in einer schematischen Draufsicht den Gegenstand aus Fig. 10a
- Fig. 11a: in einer schematischen Ansicht ein Ausführungsbeispiel eines Immersionsobjektivs mit dazugehörender Funktionsgruppe,
- Fig. 11b: in einer schematischen Ansicht ein weiteres Ausführungsbeispiel eines Immersionsobjektivs mit dazugehörender Funktionsgruppe,
- Fig. 11c: in einer schematischen Ansicht ein weiteres Ausführungsbeispiel eines Immersionsobjektivs mit dazugehörender Funktionsgruppe,
- Fig. 12: in einer schematischen Ansicht ein weiteres Ausführungsbeispiel eines Immersionsobjektivs mit zusätzlicher externer Steuereinheit,
- Fig. 13: in einer schematischen Ansicht ein weiteres Ausführungsbeispiel eines Immersionsobjektivs mit zusätzlicher externer Steuereinheit, wobei ein PC zur Steuerung der externen Steuereinheit vorgesehen ist,
- Fig. 14a bis 14c: in einer schematischen Ansicht den Ablauf eines Verfahrens zur Reduktion der Blasenbildung und zur gleichzeitigen Benetzung des Spalts zwischen dem Objektiv und dem Objekt mit Immersionsflüssigkeit bei Immersionsobjektiven,
- Fig. 15: in einer Draufsicht ein Mikroskopobjektiv, auf dem eine Vorrichtung zum Ausbilden eines Immersionsfilms befestigt ist,
- Fig. 16: in einer teilweise geschnittenen Seitenansicht das Mikroskopobjektiv nebst der Vorrichtung gemäß Fig. 15 und
- Fig. 17: in einem vergrößerten Ausschnitt den Gegenstand aus Fig. 16.

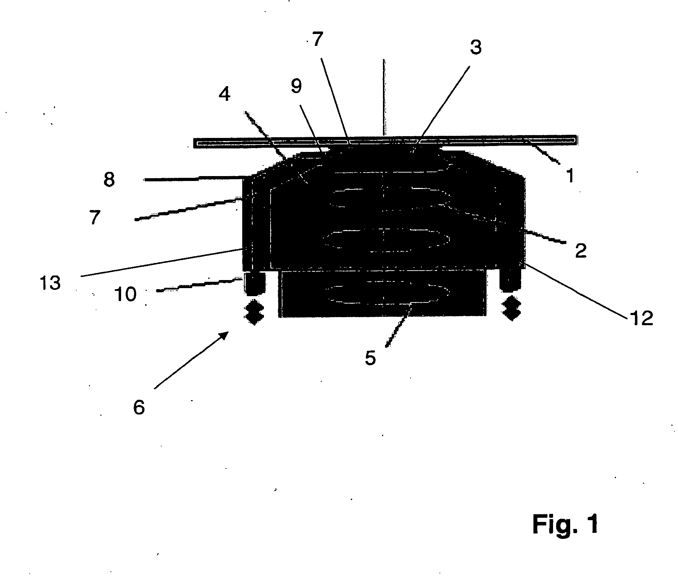

Fig. 1 zeigt ein erstes Ausführungsbeispiel eines Immersionsobjektivs zur mikroskopischen Untersuchung eines Objekts, wobei in Bezug auf das Objekt der Einfachheit halber lediglich der Objektträger 1 gezeigt ist. Entsprechende Objektive lassen sich beispielsweise in der Fluoreszenzmikroskopie, Hellfeldmikroskopie, Dunkelfeldmikroskopie, Phasenkontrastmikroskopie, etc. einsetzen. Ein Immersionsmedium wird verwendet, um den optischen Übergang zwischen dem Objektiv und einem Präparat bzw. dem Objektträger 1, zu verbessern.

Fig. 1 zeigt das Objektiv in schematischer Darstellung, wobei dort die inneren Linsen 2 lediglich angedeutet sind. Die äußere Linse 3 ist gegenüber dem Objektträger 1 positioniert. Die äußere Linse 3 wird auch Austrittslinse genannt. Die Linsen 2, 3 sind innerhalb eines Objektivkörpers 4 angeordnet.

Des Weiteren ist in Fig. 1 erkennbar, dass das Objektiv einen unteren, schmaleren Objektivhals 5 umfasst, der als Sicherheitspuffer beim Kontakt mit dem Objektträger 1 dient. Ein zumindest geringfügiges Ineinanderschieben der beiden Bereiche des Objektivs ist möglich.

Eine Zuführeinrichtung 6 dient zum Zuführen von Immersionsflüssigkeit 7 in den Bereich zwischen dem Objektträger 1 und der äußeren Linse 3, wobei die Zuführeinrichtung 7 eine den Objektivkörper 4 umschließende, im Bereich der äußeren Linse 3 offene Kappe 8 umfasst. Die Kappe 8 bildet zur äußeren Linse 3 hin einen Spalt 9, der bei dem hier gezeigten Ausführungsbeispiel als Ringspalt ausgeführt ist. Die Immersionsflüssigkeit 7 tritt über den Spalt 9 aus der Kappe 8 aus.

Die Zuführeinrichtung 6 umfasst mindestens einen in der Kappe 8 ausgebildeten Anschluss 10, der im Konkreten als Anschlussstutzen zum Anschließen eines Schlauchs ausgebildet ist. Er dient zur Zu- und Abfuhr von Immersionsflüssigkeit 7.

Fig. 1 zeigt des Weiteren, dass die Kappe 8 einen Verbindungsbereich 11 aufweist, der in sich einen Ringkanal 12 bildet, der zum Zuführen und als Reservoir für die Immersionsflüssigkeit 7 dient. Eine Innenwandung 13 der Kappe 8 dient zur unmittelbaren Anlage an dem Objektivkörper 4. Bei dem hier gewählten Ausführungsbeispiel ist die Kappe 8 mit dem Verbindungsbereich 11 auf den Objektivkörper 4 aufgepresst, wobei ein thermisches Aufschrumpfen von Vorteil ist. Hinsichtlich weiterer Befestigungsmöglichkeiten wird zur Vermeidung von Wiederholungen auf den allgemeinen Teil der Beschreibung verwiesen.

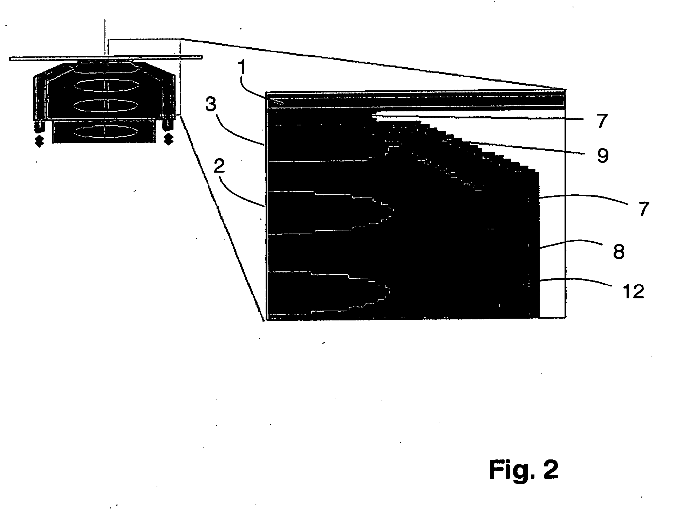

Fig. 2 zeigt den Gegenstand aus Fig. 1 in einer vergrößerten Teilansicht. Dort ist angedeutet, dass sich aufgrund des Einflusses von Oberflächen- und Grenzflächenspannung im Bereich des Ringspalts 9 eine Art Innenkehle zwischen der Immersionsflüssigkeit 7 und dem Objektträger 1 ausbildet.

Fig. 2 lässt des Weiteren erkennen, dass der Ringspalt 9 bzw. die dortige Spaltbreite durch Positionierung der Kappe 8 derart einstellbar ist, dass sich zwischen der Oberflächenspannung der Immersionsflüssigkeit 7 und der Grenzflächenspannung der Umgebung (Glas der äußeren Linse 3 und Metall der Kappe 8) ein Gleichgewicht derart einstellt, dass ein Austreten des Immersionsmediums ohne Pumpendruck zumindest weitgehend vermieden ist.

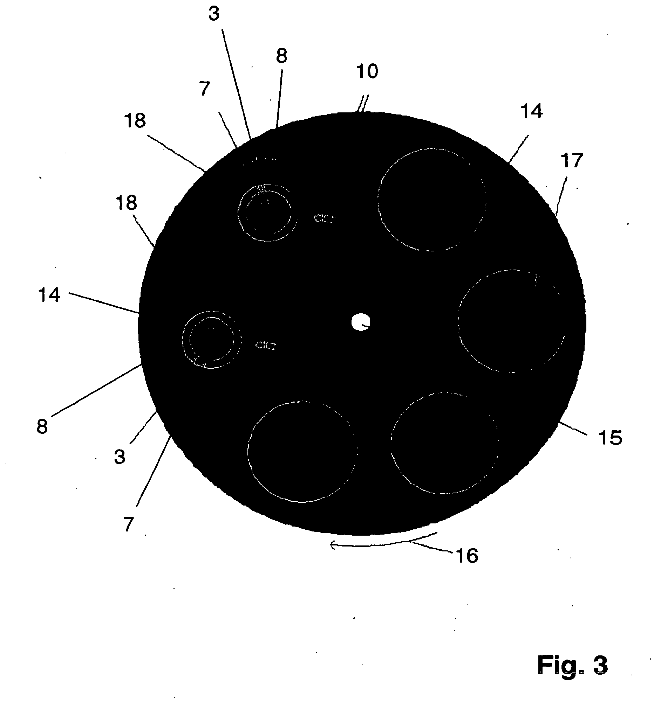

Fig. 3 zeigt ein besonderes Ausführungsbeispiel für die Verwendung von Immersionsobjektiven, nämlich in der Anordnung in einem Objektivrevolver 14. Eine solche Anordnung trägt der Situation Rechnung, wonach in der Mikroskopie oft mehrere Objektive zum Einsatz kommen. Der Einsatz mehrerer unterschiedlicher Objektive dient beispielsweise zur Erreichung verschiedener Auflösungen. Um zwischen den Objektiven wechseln zu können, befinden sich mehrere Objektive, in diesem Falle Immersionsobjektive, in dem Objektivrevolver 14. Dieser ist rotationssymmetrisch ausgebildet.

In Fig. 3 ist des Weiteren angedeutet, dass der Objektivrevolver 14 ein zentrales Mittelloch aufweist, welches als Drehpunkt für den Objektivrevolver 14 dient. Die Drehrichtung des Objektivrevolvers 14 ist durch den Pfeil 16 angedeutet. Der Objektivrevolver 14 wird dann gedreht, wenn eine Objektivumschaltung gewünscht wird.

Fig. 3 zeigt weiter, dass im Objektivrevolver 14 insgesamt 6 Aufnahmen 17 zum Einsetzen von Objektiven vorgesehen sind. Zwei Immersionsobjektive 18 sind eingesetzt, wobei die Immersionsobjektive 18 mit einer entsprechenden Kappe 8 als Bestandteil einer Zuführeinrichtung 6 ausgestattet sind. Fig. 3 lässt des Weiteren erkennen, dass die Kappe 8 einen Anschlussstutzen 10 zur Zuleitung der Immersionsflüssigkeit 7 aufweist.

Die in Fig. 3 gewählte Draufsicht zeigt die äußere Linse 3 des Objektivs, wobei diese Linse 3 von Immersionsflüssigkeit 7 umgeben ist. Die Immersionsobjektive 18 sind jeweils mit der Kappe 8 ausgestattet und lassen sich über ein an der Kappe 8 vorgesehenes, in Fig. 3 nicht gezeigtes Außengewinde in ein entsprechendes Innengewinde der Aufnahme 17 einschrauben. Die Anschlussstutzen 10 für die Zufuhr und für das Zurücksaugen von Immersionsflüssigkeit 7 sind dabei so angeordnet, dass sie in den inneren Bereich des Objektivrevolvers 14 ragen. Ein nach innen gerichteter Anschluss ist daher möglich.

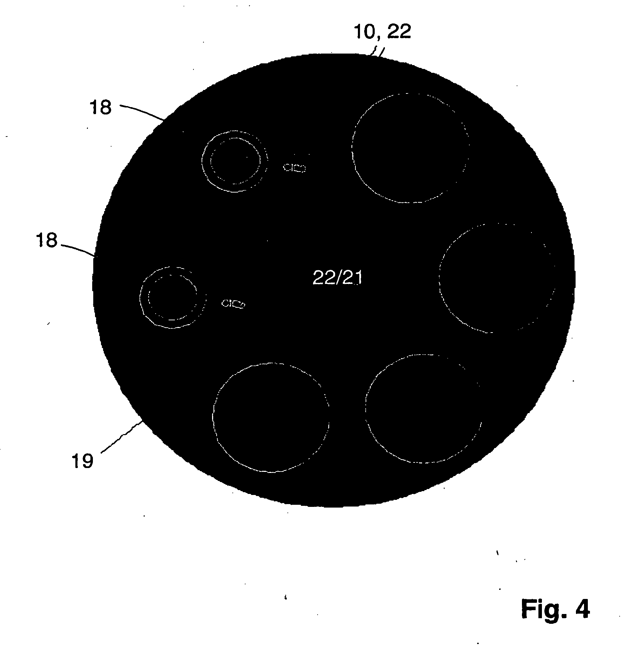

Fig. 4 zeigt in einer schematischen Draufsicht den Objektivrevolver aus Fig. 3, wobei dort innerhalb des Objektivrevolvers 14 eine Funktionseinheit 19 angeordnet ist. Die Immersionsobjektive 18 sind über die Anschlussstutzen 10 mit der Funktionseinheit 19 verbunden, wobei diese Funktionseinheit 19 u. a. ein Steuersystem 20 und ein Reservoir 21 für Immersionsflüssigkeit 7 umfasst. Der Anschluss erfolgt über Schlauchverbindungen 22.

Wie bereits im allgemeinen Teil der Beschreibung ausgeführt, kann die Funktionseinheit 19 eine eigene Energieversorgung, beispielsweise in Form eines Akkus, einer Batterie oder aber auch ein Anschlusskabel zum Mikroskop mit entsprechenden Schleifkontakten umfassen. Ebenso kann die Funktionseinheit 19 eine Elektronik zur Ansteuerung von kleinen Pumpen umfassen, die zum Fördern der Immersionsflüssigkeit dient.

Eine integrierte Elektronik dient zum Senden und Empfangen von Steuersignalen, die auf Abfragen hin von Sensoren geliefert werden und zum Fördern der Immersionsflüssigkeit dienen.

Mindestens eine Mikropumpe dient zum Fördern mindestens einer Art von Immersionsflüssigkeit. Mikroventile dienen zur individuellen Selektion eines Objektivs, welches mit Immersionsflüssigkeit zu versorgen ist. Eine möglichst klein ausgeführte Vorratskammer für Immersionsflüssigkeit kann austauschbar und/oder befüllbar sein. Die Kappe ist mit einem Anschlussstutzen ausgeführt, worüber sie und somit das Immersionsobjektiv mit einer hinreichenden Menge an Immersionsflüssigkeit versorgt wird.

Die zuvor bereits erwähnte Funktionseinheit 19 umfasst u. a. ein Steuerungssystem 20, dem wiederum ein Mikrokontroller zur Steuerung des gesamten Ablaufs zugeordnet sein kann. Ebenso ist eine externe Steuerung denkbar, nämlich eine Steuerung über ein externes elektronisches Steuerinterface. Auch ist es denkbar, dass ein teilweiser autonomer Mikrokontroller an Bord der Funktionseinheit 19 durch externe Steuerkommandos ergänzt wird.

Bei dem externen Steuerungssystem lässt sich die Zufuhr und das Absaugen einer beliebigen Immersionsflüssigkeit zu- bzw. von einem Objektiv steuern. Auch ist es denkbar, dass Immersionsflüssigkeiten synchron zugeführt und abgepumpt werden, nämlich an zwei frei wählbaren Objektiven. Dies ist insbesondere für eine 4Pi-Anordnung von Bedeutung.

Regelmäßig erfolgt ein Abfragen des aktuellen Status, zum Beispiel ein Abfragen des Füllstandes im Reservoir 21. Die aktuelle Menge des eingefüllten Immersionsmediums am Objektiv lässt sich ebenfalls über Sensoren abfragen.

Die Steuerung enthält darüber hinaus ein Kommunikationsinterface, welches vorzugsweise drahtlos mit der Funktionseinheit 19 kommuniziert, so beispielsweise über Bluetooth, WLAN oder aber auch über Kabel.

Ebenso ist ein manuelles Zuführen und Absaugen von Immersionsflüssigkeit denkbar. Das externe Steuersystem kann des Weiteren eine API (allgemeines Programmier Interface) zum Anschließen an ein Software-Interface und somit an einen PC nach Wahl umfassen. Auch enthält das Steuersystem eine API (allgemeines Programmier Interface) zum Anschließen an ein Hardware-Interface, zum Beispiel an ein Touch-Screen, damit beliebige Benutzereingaben möglich sind.

Das gesamte System kann per Software oder manuell gesteuert werden. Im Falle einer Softwaresteuerung ist ein besonderes Kontrollinterface für Benutzereingaben, für die Auswahl eines Objektivs, für das Zugeben einer vordefinierten Menge an Immersionsflüssigkeit, für das Abpumpen einer vordefinierten Menge an Immersionsflüssigkeit und für ein Timer-Setting zum Nachführen einer gewissen Menge an verdunsteter Immersionsflüssigkeit vorgesehen. Im Rahmen der Prozessauswahl erfolgt eine automatische Justage mittels Immersionsflüssigkeit, und zwar regelmäßig beim Objektivwechsel. Außerdem sind spezielle Bewegungen, insbesondere Kreisbewegungen, zwischen Mikroskoptisch und Objektiv zur Reduktion von Blasenbildung in der Immersionsflüssigkeit und zur Begünstigung der Benetzung vorgesehen.

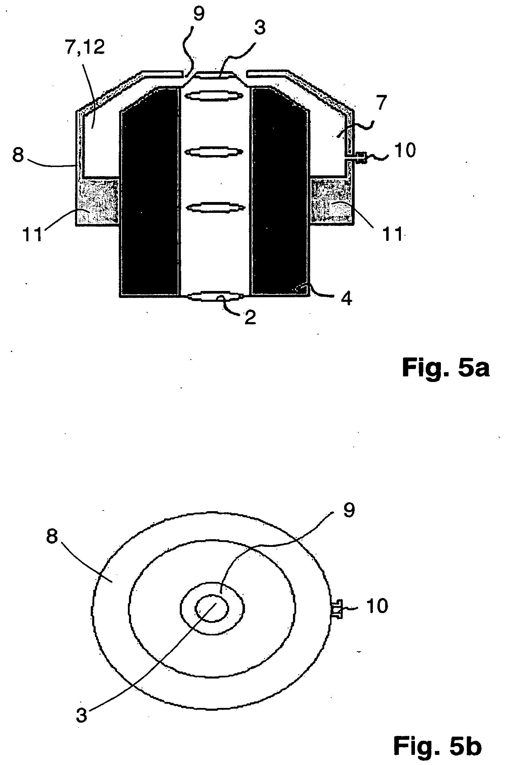

Die Figuren 5a und 5b zeigen ein weiteres Ausführungsbeispiel eines Immersionsobjektivs, bei dem die Kappe 8 einen Verbindungsbereich 11 aus Vollmaterial umfasst. Die Kappe 8 ist insgesamt aus Metall gefertigt, was in Bezug auf die Kombination mit einer temperierten Klimakammer von Vorteil ist. So nimmt nämlich die Kappe 8 sehr schnell die Temperatur der Klimakammer an und die Temperatur wird durch Wärmeleitung an die im Inneren der Kappe 8 befindliche Immersionsflüssigkeit 7 geleitet. So lässt sich die Temperatur der Immersionsflüssigkeit 7 konstant halten. Gemäß Fig. 5a ist die entsprechend gefräste bzw. sonst wie geformte Kappe 8 auf den Objektivkörper 4 aufgesteckt. Der Objektivkörper 4 dient als Halterung bzw. zur Aufnahme der Kappe 8. Entsprechend der in Fig. 5a gezeigten Ausgestaltung wird durch die Anwesenheit der Kappe 8 der optische Aufbau der Linsen 2, 3 nicht gestört und auch nicht verändert, so dass sich eine entsprechende Kappe 8 auch nachträglich an ein bereits vorhandenes Objektiv bzw. an einen entsprechenden Objektivkörper 4 anbringen lässt.

Die Kappe 8 schließt sich abdichtend an die Außenfläche des Objektivkörpers 4 an, so dass es zu einer mechanisch und optisch festen Verbindung zwischen der Kappe 8 und dem Objektivkörper 4 kommt. Zwischen dem Objektivkörper 4 und der Kappe 8 ist ein kleiner ringförmiger Hohlraum bzw. ein Ringkanal 12 gebildet, der Immersionsflüssigkeit 7 enthält.

Über den Anschluss 10 wird ein weiteres Volumen an Immersionsflüssigkeit 7 in den Ringkanal 12 gefördert, wodurch die Immersionsflüssigkeit 7 in Richtung des Ringspalts 9 gefördert wird. Der Ringspalt 9 erstreckt sich konzentrisch um die äußere Linse 3. Über den Ringspalt 9 tritt die Immersionsflüssigkeit 7 aus, um den Bereich zwischen der äußeren Linse 3 und dem in Fig. 5a nicht gezeigten Objektträger auszufüllen.

Wird über den Anschlussstutzen 10 gesaugt bzw. ein Unterdruck ausgeübt, zieht sich die Immersionsflüssigkeit in Richtung des in Fig. 5a nicht gezeigten Reservoirs zurück. So lässt sich Immersionsflüssigkeit gezielt und definiert in den Bereich der äußeren Linse 3 mittels Druck fördern oder aber mittels Unterdruck aus diesem Bereich entfernen bzw. zurücksaugen.

Die Größe des Ringspalts 9 ist dabei so zu bemessen, dass die Grenzflächenspannung am Objektiv und die Oberflächenspannung der Immersionsflüssigkeit nutzbar sind, um ein unbeabsichtigtes Nachlaufen von Immersionsflüssigkeit zu verhindern. Entsprechend kann die Immersionsflüssigkeit nur kontrolliert durch Druck oder Sog nachgefüllt oder zurückgezogen werden.

Fig. 5b zeigt den Gegenstand aus Fig. 5a in einer Draufsicht.

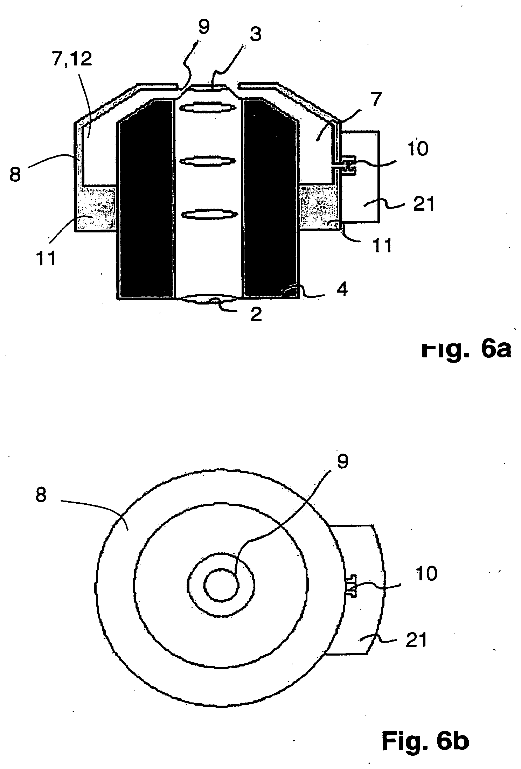

Bei dem in den Fig. 6a und 6b gezeigten Ausführungsbeispiel ist auf der Kappe 8 ein Reservoir 21 vorgesehen, wobei dieses Reservoir 21 als aufsteckbarer Tank ausgeführt ist. Das Reservoir 21 sitzt unmittelbar auf dem Anschlussstutzen 10, so dass eine Schlauchverbindung nicht erforderlich ist. Das Reservoir 21 ist vorzugsweise mit einer flexiblen Außenhülle versehen. Durch Eindrücken der Außenhülle wird Immersionsflüssigkeit 7 durch den Ringspalt 9 nach außen gedrückt. Wenn der Druck auf die flexible Außenhülle des Reservoirs 21 nachlässt, bewirkt die Elastizität der Außenhülle ein Zurücksaugen der Immersionsflüssigkeit.

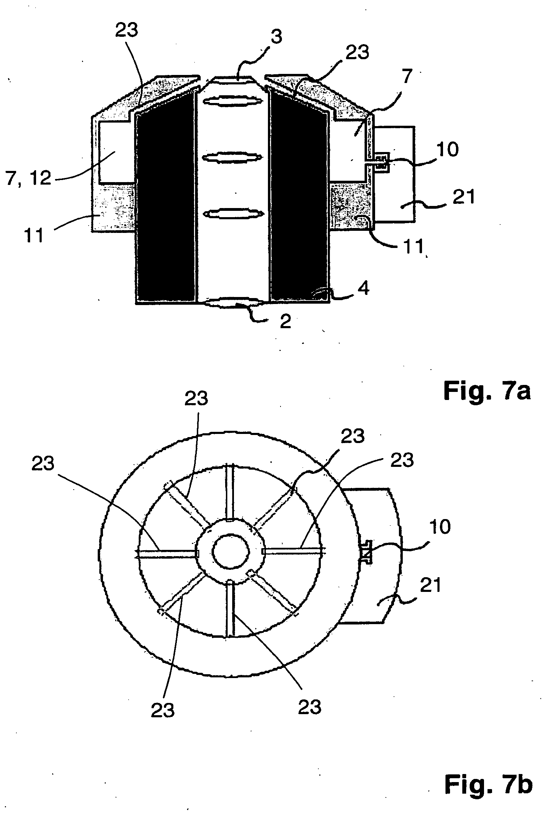

Bei dem in den Fig. 7a und 7b gezeigten Ausführungsbeispiel wird in etwa die Funktion der Schweißdrüsen der menschlichen Haut nachgeahmt. So wird nämlich die Immersionsflüssigkeit 7 aus dem Reservoir 21 durch dünne Bohrlöcher 23 hindurch in die Nähe der äußeren Linse 3 gefördert, wo es in kleinen "Perlen" austritt. Der sonst als Ringspalt 9 ausgebildete Austritt setzt sich somit zusammen aus der Gesamtheit der Bohrlöcher 23, die Immersionsflüssigkeit 7 in den Bereich um die äußere Linse 3 führen. Über Druck und Sog lässt sich die Größe der "Perlen" variieren, so dass mehr oder weniger Immersionsflüssigkeit 7 zugeführt oder abgepumpt werden kann.

Eine Vorrichtung entsprechend den Fig. 7a und 7b hat den Vorteil, dass eine nur sehr geringe Menge an zugeführter/abgeführter Immersionsflüssigkeit 7 zu handhaben ist, wodurch sich eine präzise Kontrollierbarkeit des Systems ergibt. Außerdem ist aufgrund der perlenförmigen Ausbringung der Immersionsflüssigkeit 7 die Verdunstungsfläche kleiner als bei dem herkömmlichen Ringspalt 9. Folglich kann das innerhalb der Kappe 8 vorgesehene Reservoir bzw. der dortige Ringkanal 12 nicht so ohne weiteres austrocknen, was abermals von Vorteil ist. Dies gilt insbesondere dann, wenn es sich bei der Immersionsflüssigkeit um Wasser handelt und wenn bei erhöhten Umgebungstemperaturen gearbeitet wird.

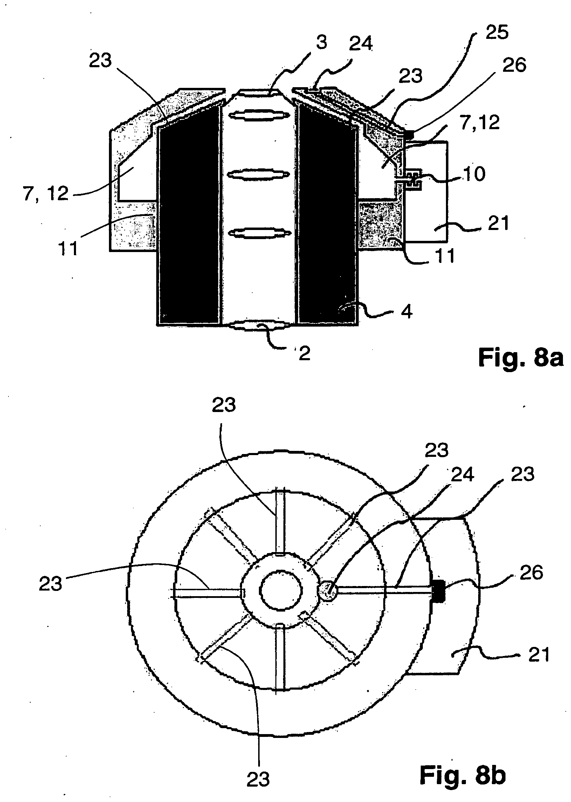

Die Fig. 8a und 8b zeigen ein weiteres Ausführungsbeispiel eines Immersionsobjektivs, wobei dort ein Sensor 24 vorgesehen ist, der möglichst nahe der äußeren Linse 3 angeordnet sein sollte. Der Sensor 24 ist mittels einer Kabelverbindung 25 mit einer Anschlusseinrichtung 26 verbunden. Von dort aus lässt sich über eine äußere, in den Fig. 8a und 8b nicht gezeigte Messelektronik der Sensorzustand abfragen.

Der Sensor 24 ist vorzugsweise als Fotozelle ausgeführt, die ein Phänomen ausnutzt, wonach der Reflex des Lichts an einer Glasoberfläche verringert wird, wenn es zu einer einwandfreien Benetzung der Glasoberfläche (d.h. des Objektträgers 1) mit Immersionsflüssigkeit 7 kommt. Ohne Immersionsflüssigkeit 7 ist mit einem größeren Streulichtanteil zu rechnen als bei Anwesenheit von Immersionsflüssigkeit 7, so dass das gemessene Signal spontan abnimmt, sobald die Immersionsflüssigkeit 7 in den Bereich zwischen dem Sensor 24 und dem Objektträger 1 gelangt.

Als weiterer Sensortyp könnte ein die elektrische Leitfähigkeit messender Sensor in Frage kommen, insbesondere dann, wenn als Immersionsflüssigkeit Wasser verwendet wird. Bei Ölen ist mit einer nur geringen Leitfähigkeit und entsprechend auch mit einer geringen Leitfähigkeitsänderung zu rechnen. Hier könnte ein kapazitiver Sensor zum Einsatz kommen, der die Dielektrizitätskonstante des Immersionsöls nutzt, um über eine Kapazitätsänderung den Benetzungsgrad mit Immersionsflüssigkeit zu messen.

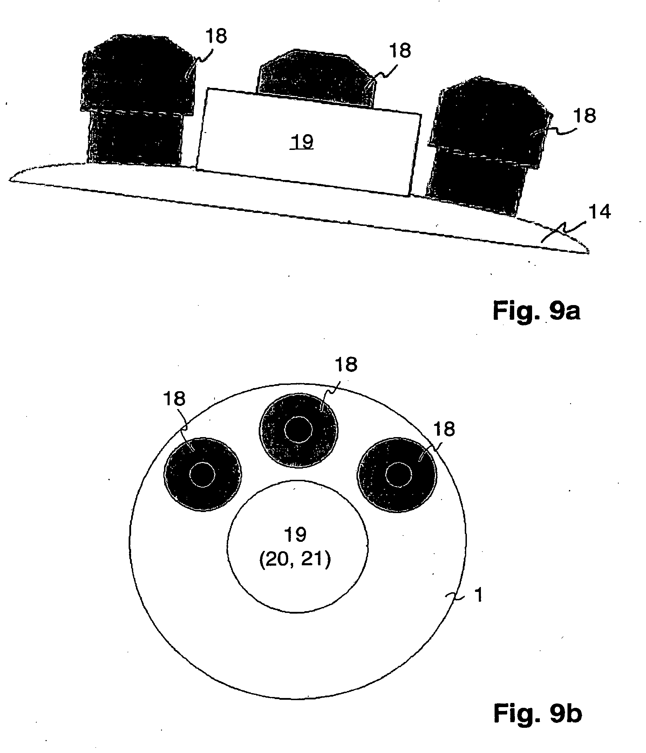

Die Fig. 9a und 9b zeigen die Anordnung von Immersionsobjektiven 18 in bzw. an einem Objektivrevolver 14. Mittig auf dem Objektivrevolver 14 ist eine Funktionseinheit 19 vorgesehen. Diese Funktionseinheit 19 umfasst ein Steuerungssystem 20 sowie ein Reservoirs 21 für Immersionsflüssigkeit 7.

Im Konkreten dient der Objektivrevolver 14 zur Aufnahme mehrerer Immersionsobjektive 18, die sich - im eingesetzten Zustand - an der äußeren Peripherie des rotationssymmetrischen Objektivrevolvers 14 befinden. Die Rotationssymmetrie ermöglicht ein Umschalten zwischen den Immersionsobjektiven 18. Dies wird genutzt, um bei automatisch betriebenen Immersionsobjektiven 18 ein Umschalten zu ermöglichen. Dies gilt auch in Bezug auf die Anbringung der Funktionseinheit 19 im Zentrum des Objektivrevolvers 14, wobei die Funktionseinheit 19 entsprechend in einem im Querschnitt runden und insoweit rotationssymmetrischen Gehäuse untergebracht ist.

Die spezielle Beschaffenheit des in der Funktionseinheit 19 enthaltenen Steuersystems 20 ermöglicht beispielsweise eine Fernsteuerung des Systems, insbesondere zum gezielten Zu- und Abführen der Immersionsflüssigkeit. Ein weiterer Vorteil unter Verwendung eines Objektivrevolvers ist darin zu sehen, dass bestehende Mikroskope mit dieser Technik nachrüstbar sind, wobei sich das Nachrüsten sowohl auf die einzelnen Objektive in Bezug auf die Anbringung einer Kappe zur Versorgung mit Immersionsmedium als auch auf die Ausstattung des Objektivrevolvers mit entsprechenden Immersionsobjektiven 18 bezieht.

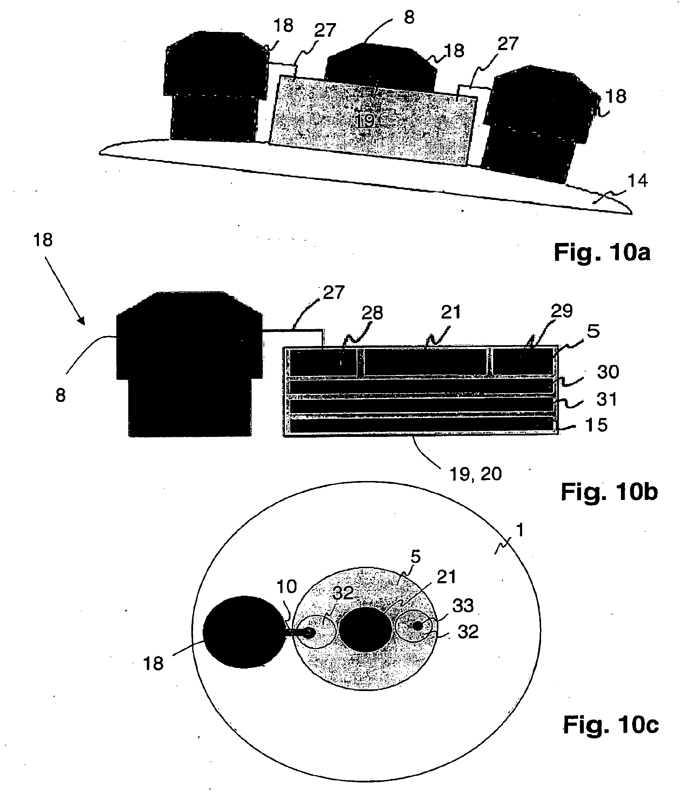

Die Fig. 10a bis 10c zeigen abermals die Anordnung von Immersionsobjektiven 18, wobei Fig. 10b den prinzipiellen Aufbau der Funktionseinheit 19 und dabei des darin enthaltenen Steuerungssystems 20 zeigt.

Die Immersionsobjektive 18, die sich auf dem Objektivrevolver 14 befinden, sind über entweder starre oder flexible Rohrleitungen 27 mit dem zentralen Steuerungssystem 20 verbunden und können auf diese Weise mit Immersionsflüssigkeit 7 versorgt werden. Damit das Ziel einer gezielten Zu- und Abführung von Immersionsflüssigkeit realisierbar ist, sind in der Funktionseinheit 19 weitere erforderliche Baugruppen vorgesehen. Diese Baugruppen sind in Fig. 10b schematisch dargestellt.

Die Baugruppen 28 und 29 sind als Fördersysteme zu verstehen, die Pumpen, Ventile, etc. enthalten können. Mittels dieser Baugruppen 28, 29 wird die erforderliche Menge an Immersionsflüssigkeit aus dem Reservoir zu den jeweiligen Immersionsobjektiven 18 gefördert. Zum Einsatz einer externen Steuereinheit zur Kontrolle über die Fördermenge an Immersionsflüssigkeit und ebenso zur Kontrolle der Förderrichtung ist ein besonderes Modul 30 vorgesehen, welches eine Kommunikationsschnittstelle darstellt. Diese Kommunikationsschnittstelle arbeitet vorzugsweise drahtlos. Ein weiteres Modul 31 übernimmt die eigentliche Steuerung der Pumpen und Ventile des zentralen Steuerungssystems 20. Entsprechende Befehle nimmt das Steuerungssystem 20 über das die Kommunikation bewerkstelligende Modul 30 entgegen und sendet entsprechende Befehle über das Modul 30 in Form von Ergebnisprotokollen oder dergleichen an eine externe Steuereinheit sofern diese vorgesehen ist. Ebenso ist eine rein interne Steuerung möglich. Jedenfalls lässt sich auf diese Weise zwischen dem die Steuerung bewerkstelligenden Modul 31 und dem für die Kommunikation verantwortlichen Modul 30 und einem externen Steuerungssystem ein Regelkreis realisieren.

Die Immersionsobjektive 18 werden über entsprechende Anschlussleitungen, vorzugsweise über flexible und reversibel verbundene Anschlussleitungen, mit einem Förderungssystem 32 zusammengebracht, in dem die die Immersionsflüssigkeit fördernden Leitungen mit entsprechenden Kontaktstutzen bzw. Anschlussstutzen 10 verbunden sind. Der Kontaktstutzen 33 ist ein Anschlussstutzen in bzw. auf der Funktionseinheit 19 bzw. in dem Steuerungssystem 20.

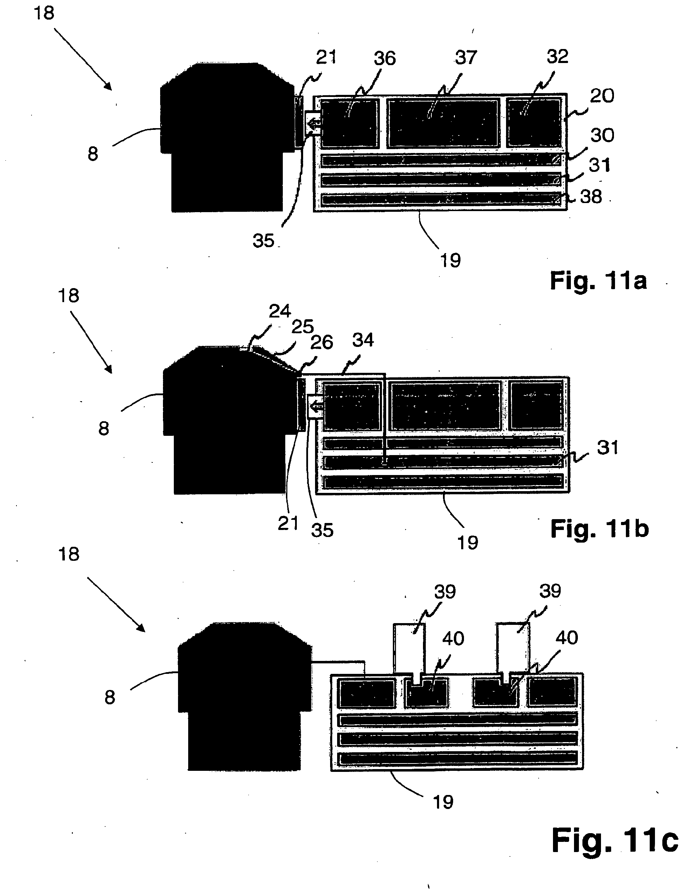

Die Fig. 11a, 11b und 11c zeigen weitere Ausführungsbeispiele mit unterschiedlichen Funktionseinheiten 19.

Bei dem in Fig. 11 a gezeigten Ausführungsbeispiel sind die die Objektive umgebenden Kappen 8 auf ihrer Außenhülle mit einem Reservoir 21 ausgestattet, welches als Tank aufgesteckt ist. Die im dem Reservoir 21 enthaltene Immersionsflüssigkeit lässt sich durch Druck auf die flexible Außenhülle komprimieren bzw. über den so aufgebrachten Druck in die Kappe hineinpumpen. Zum automatischen Aufbringen des Drucks ist eines Presseinrichtung 35 vorgesehen, die von außen auf die flexible Außenhülle des Reservoirs 21 wirkt. Sobald der Druck auf die flexible Außenhülle nachlässt, sorgt die Elastizität der flexiblen Außenhülle des Reservoirs 21 für einen Sog, so dass das Immersionsmedium wieder abgepumpt wird. Entsprechend wird die Presseinrichtung 35 angesteuert.

Im Konkreten lässt sich dies dadurch realisieren, dass in der Funktionseinheit 19 bzw. im Steuerungssystem 20 das dort enthaltene Förderungssystem 32 einen ausfahrbaren Druckstempel der Presseinrichtung 35 beaufschlagt, der so angeordnet ist, dass er auf die flexible Außenhülle des Reservoirs 21 drückt. Dadurch wird Immersionsflüssigkeit in der Kappe befördert bzw. zum Auslass hin gedrückt. Durch Heraus- und Hereinfahren des Druckstempels, d.h. durch betätigen der Presseinrichtung 35, lässt sich auf die Immersionsflüssigkeit Druck und Zug ausüben, der unter Ausnutzung der Elastizität der flexiblen Außenhülle des Reservoirs 21 entsteht. Im Rahmen einer solchen Ausgestaltung liegt eine komplette Trennung zwischen der Immersionsflüssigkeit und dem eigentlichen Beförderungssystem 32 vor, so dass keine Verunreinigungen von außerhalb, beispielsweise von Seiten des Beförderungssystems 32 her, in die Immersionsflüssigkeit gelangen können.

Ein Sensor 36 dient zur regelmäßigen Ermittlung des Füllstands an Immersionsflüssigkeit 7.

Bei dem in Fig. 11b gezeigten Ausführungsbeispiel ist ebenfalls ein Sensor 24 vorgesehen, der als Fotodetektor, als kapazitiver Sensor oder als Leitfähigkeitssensor ausgeführt sein kann. Der Sensor 24 dient zur Detektion des Benetzungsgrades des Objektivs bzw. der äußeren Linse mit Immersionsmedium. Im Falle der Verwendung eines Fotosensors nutzt man die Tatsache, dass bei Verwendung eines geeigneten Immersionsmediums die Menge des an dem Objektträger reflektierten Lichts abnimmt. Da der Fotosensor die Menge des reflektierten Lichts misst, bedeutet ein Abfall der gemessenen Lichtintensität entweder, dass gegenüber dem Objektiv keine Reflexionsfläche vorliegt, beispielsweise weil das Objektiv zu weit vom Objektträger entfernt ist, oder aber, dass kein Immersionsmedium zwischen dem Objektiv und dem Objektträger eingebracht ist. Im ersten zuvor genannten Fall lassen sich auch andere Prinzipien zur Messung realisieren. So ist es möglich, zu messen, wie weit das Objektiv von dem Objektträger in etwa entfernt ist. Dies kann über einen kontaktlosen Abstandssensor erfolgen. Im zweiten Falle nutzt man die Tatsache, dass ein Abfall der Intensität bedeutet, dass eingedrungenes Immersionsmedium die reflektierte Lichtmenge an der Glasoberfläche des Objektträgers reduziert hat.

Die Steuerleitungen 34 des Sensors 24 sind vorzugsweise im Inneren der Kappe nach außen geführt, um nämlich das gesamte System gut reinigen zu können. Sie enden in einem möglichst klein ausgeführten Steckkontakt, der im Sinne einer Anschlusseinrichtung 26 dient. Über die Anschlusseinrichtung 26 wird der Sensor 24, beispielsweise über eine Kabelverbindung 25 mit der elektronischen Steuereinheit 30 verbunden. Hier findet die Auswertung der Sensordaten statt. Entsprechend der Auswertung wird die Presseinrichtung 35 betätigt oder entlastet, so dass entweder Immersionsflüssigkeit gefördert oder zurückgezogen wird.

Bei dem in Fig. 11c gezeigten Ausführungsbeispiel ist die Funktionseinheit 19 zusätzlich mit Aufstecktanks 39 ausgestattet, die jeweils in eine interne Aufnahmeeinheit 40 eingesetzt sind.

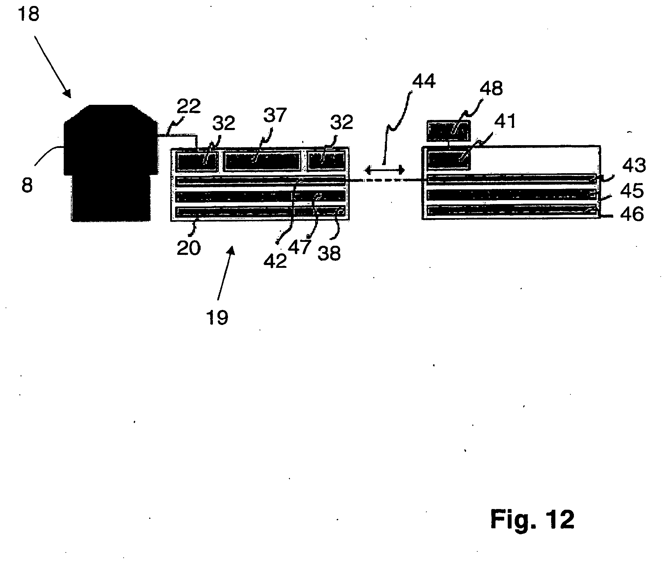

Bei dem in Fig. 12 gezeigten Ausführungsbeispiel ist ein externes Steuerungssystem 41 vorgesehen. Dieses Steuerungssystem 41 dient zur Kontrolle der zentralen Steuereinheit, die der Funktionseinheit 19 zugeordnet ist. Die Verbindung des externen Steuerungssystems 41 mit der Funktionseinheit 19 bzw. dem dort vorgesehenen Steuerungssystem 20 erfolgt über geeignet ausgeführte Kommunikationslayer 42, 43, die über die Datenleitung 44 oder entsprechend über Funk miteinander verbunden sind. Dabei können alle standardisierten Verfahren zur Datenübertragung zum Einsatz kommen, so beispielsweise WLAN, Bluetooth, Funkprotokolle, etc. Eine Steuerung über Funk ermöglicht ein freies Drehen des Objektivrevolvers 14, da keinerlei Anschlusskabel behindern und somit ein Verwickeln von Kabeln ausgeschlossen ist. Das Kommunikations-Interface enthält insbesondere ein WEB-Interface, mit dem eine Steuerung über Webseiten, insbesondere über ein Intranet mittels eines Browsers, möglich ist. Auch lassen sich externe Benutzer über den Systemstatus entsprechend informieren.

Die gesamte Steuerung und Regelung kann im externen Steuerungssystem 41 eine besondere Steuerungsebene 45 übernehmen, während die Energieversorgung über eine dazu dienende Schicht zur Verfügung gestellt wird. Der so realisierte modulare Aufbau ermöglicht den Einsatz von Firmware-Ebenen sowohl in der Funktionseinheit 19 bzw. im dortigen zentralen Steuerungssystem 20 als auch in dem externen Steuerungssystem 41. Die Firmware sitzt jeweils individuell auf den korrespondierenden Kommunikationslayern 42, 43 und/oder auf den beiden Steuerungsebenen 47 und 45. Durch die Trennung können Firmware-Updates gezielt in den Kommunikationslayer eingespielt werden, wobei sichergestellt wird, dass das Zusammenspiel der Einheiten gewährleistet ist. So ist ein simultanes Update der korrespondierenden Kommunikationslayer 42, 43 möglich.

Neben einem Software-Steuerinterface, welches an die Kommunikationslayer 32, 43 angeschlossen ist und eine Steuerung der unterschiedlichen Funktionen über einen PC ermöglicht, ist zusätzlich eine manuelle Steuerung möglich. Hierzu ist ein externes User-Terminal 48 in Form eines Eingabegeräts, umfassend einen Bildschirm, eine Tastatur und/oder einen Touchscreen, vorgesehen. Das User-Terminal 48 ist an ein Steuerinterface innerhalb des externen Steuerungssystems 41 angeschlossen. Das externe User-Terminal kann im einfachsten Fall als eine Serie von Tasten ausgeführt sein, die eine Steuerung der Immersionsflüssigkeit ermöglicht und ein entsprechendes Feedback über zum Beispiel eine LED gibt. Vorzugsweise ist ein Touchscreen angeschlossen, der Anwendereingaben entgegennimmt und die Statusdaten des Systems - in aufbereiteter Form - ausgibt. Das Steuerinterface innerhalb des externen Steuerungssystems 41 ist universell ausgeführt, so dass es grundsätzlich möglich ist, bestehende Hardware, wie beispielsweise ein PDA, an das System anzuschließen.

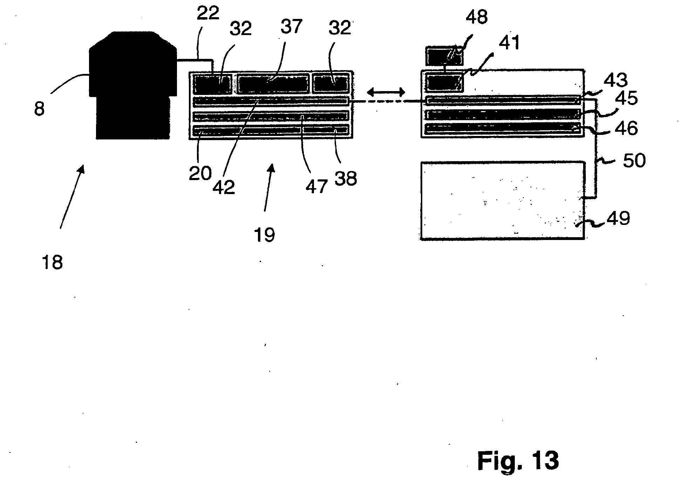

Fig. 13 ist gegenüber Fig. 12 um den Anschluss eines PC 49 ergänzt. Der PC 49 ist über eine Datenleitung 50 oder über eine drahtlose Schnittstelle oder über ein Web-Interface mit dem externen Steuerungssystem 41 verbunden. Ansonsten sei zur Vermeidung von Wiederholungen auf die Ausführungen zu Fig. 12 verwiesen.

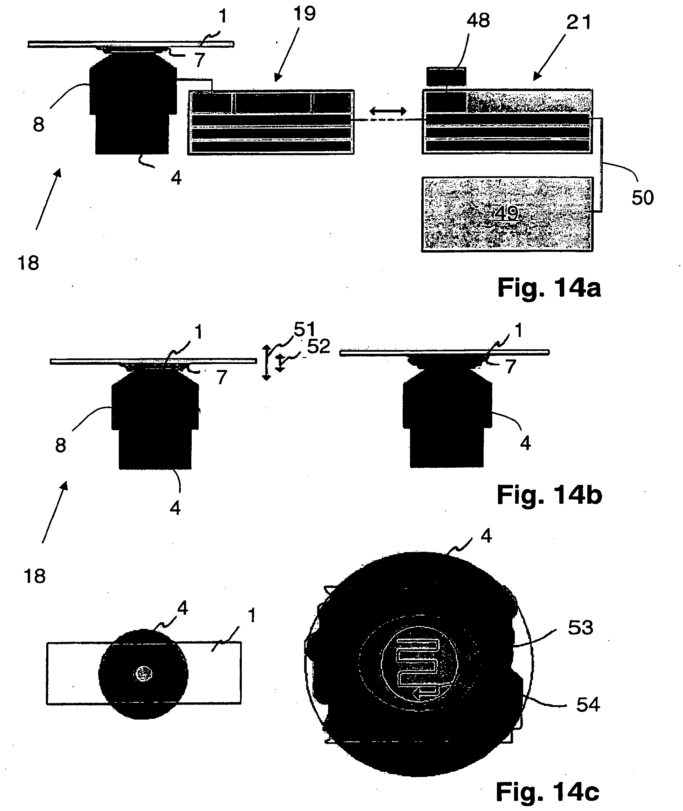

Fig. 14 verdeutlicht den Ablauf eines speziellen, softwaregestützten Verfahrens, mit dem zuverlässig verhindert werden kann, dass sich innerhalb der Immersionsflüssigkeit 7 Luftblasen bilden, die die Abbildungsqualität entsprechend den Ausführungen aus dem allgemeinen Teil der Beschreibung verschlechtern. Außerdem wird entsprechend einem Verfahren für eine gleichmäßige Immersions-Benetzung des Spalts gesorgt, der sich zwischen dem Objektiv und dem Objekt, vorzugsweise dem Objektträger, ausbildet.

Gemäß der Darstellung in Fig. 14a befindet sich zwischen dem Objektträger 1 und dem Objektivkörper 4 bzw. der in Fig. 14a nicht gezeigten äußeren Linse Immersionsflüssigkeit. Da sich beim Ausströmen der Immersionsflüssigkeit 7 gerne Luftblasen in der Immersionsflüssigkeit bilden, lässt sich das Objektiv bzw. der Objektivkörper 4 in besonders vorteilhafter Weise in X-, Y- und Z-Richtung bewegen, und zwar derart, dass eine pumpartige Bewegung auf die Immersionsflüssigkeit ausgeübt wird. Diese Bewegung hat zum Ziel, auf die in der Immersionsflüssigkeit enthaltenen Luftblasen Druck auszuüben, so dass diese ausgasen können. Dazu wird der Objektivkörper 4 in Z-Richtung aufwärts und abwärts bewegt. Diese Bewegung lässt sich der in Fig. 14b gezeigten Bewegungsfolge entnehmen und ist dort durch die Pfeile 51, 52 angedeutet.

Die Adhäsionskräfte bewirken, dass der Immersionsfilm nicht abreißt, solange eine relativ kleine Z-Bewegung ausgeführt wird. Vielmehr wird der Immersionsfilm gedehnt und gestaucht, wodurch sich die pumpende Bewegung ergibt, die das Gas in der Immersionsflüssigkeit zum Rand bewegt, so dass ein Ausgasen erfolgen kann.

Zusätzlich ist es möglich, dass der Objektivkörper 4 beispielsweise mittels eines Objektträgertisches in X- und Y-Richtung bewegt wird. Dadurch wird der Immersionsfilm regelrecht verschmiert. Bezugszeichen 54 kennzeichnet in Fig. 14c eine mäanderförmige Tischbewegung, in der sich der Tisch bewegt. Die Adhäsionskräfte der Immersionsflüssigkeit bewirken eine gleichmäßige Verteilung des Immersionsmediums im Bereich zwischen der äußeren Linse am Objektträger.

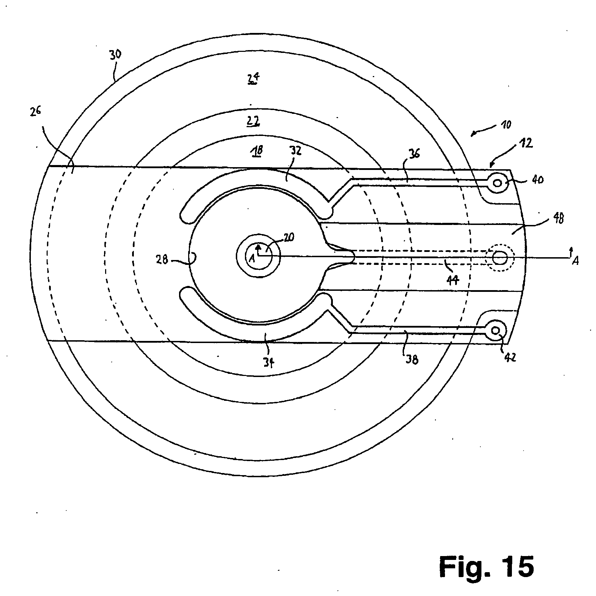

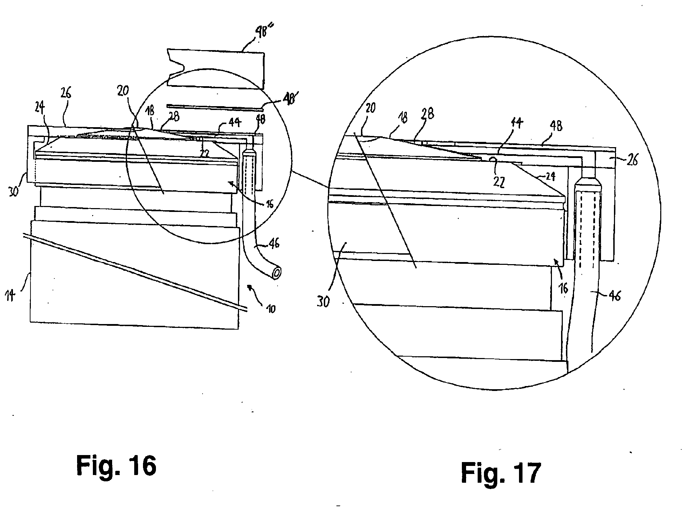

Fig. 15 zeigt eine Draufsicht auf ein Mikroskopobjektiv 10, auf den eine Vorrichtung 12 zum Ausbilden eines Immersionsfilms befestigt ist. Fig. 16 zeigt eine Seitenansicht des Objektivs 10 und der Vorrichtung 12, bei der die in der Darstellung rechte Hälfte der Vorrichtung 12 entlang der Linie A-A von Fig. 15 geschnitten dargestellt ist, und Fig. 17 zeigt den durch den Kreis in Fig. 2 hervorgehobenen Abschnitt in einer vergrößerten Darstellung.

Wie am besten in Fig. 16 zu erkennen ist, umfasst das Objektiv 10 einen Objektivkörper 14 und einen Objektivkopf 16, auf dem die Vorrichtung 12 befestigt ist. Der Objektivkopf 16 hat eine innere konische Fläche 18, in deren Zentrum eine Objektivlinse 20 vorgesehen ist, bei welcher es sich um eine Eintritts- oder Austrittslinse des Objektivs 10 handeln kann. Radial außen schließt an die innere konische Fläche 18 eine ringförmige horizontale Fläche 22 des Objektivkopfs 16 an. Die horizontale Fläche 22 wird von einer äußeren konischen Fläche 24 umgeben.

Die Vorrichtung 12 umfasst eine Platte 26, in der eine Aussparung 28 ausgebildet ist. Wenn die Vorrichtung 12, wie in den Figuren gezeigt, auf dem Objektiv 10 befestigt ist, ragt die innere konische Fläche 18 durch die Aussparung 28 in der Platte hindurch. Die Aussparung 28 der Platte 26 bildet einen Immersionsfilmbereich, der unten näher beschrieben wird.

Die Platte 26 ist mit einem Ring 30 verbunden, der den Objektivkopf 16 umgibt, wenn die Vorrichtung 12 auf dem Objektiv 10 befestigt ist.

In dem gezeigten Ausführungsbeispiel besteht die Platte 26 aus einem handelsüblichen Platinenmaterial, das aus Glasfasergewebe und Epoxidharz besteht, und auch als FR4 oder FR5 bezeichnet wird. Auf der Oberfläche der Platte 26 sind Elektroden 32 bzw. 34 ausgebildet, die parallel zum Rand der Aussparung 28 angeordnet sind. Die Elektroden 32 und 34 sind über zugehörige Leitungen 36 bzw. 38 mit Anschlüssen 40 bzw. 42 verbunden.

Die Elektroden 32, 34 und die Leitungen 36, 38 werden durch übliche Ätztechniken auf dem Platinenmaterial, aus welchem die Platte 26 gebildet ist, ausgebildet und sind somit äußerst einfach und kostengünstig herzustellen. Die Elektroden 32, 34 und die Leitungen 36, 38 bestehen vorzugsweise aus einer Kupferschicht, die von einer weiteren Schicht aus Hartgold bedeckt ist.

Wie vor allem in Fig. 15 und Fig. 17 zu sehen ist, ist in der Platte 26 ein Kanal 44 ausgebildet, der an einem Ende mit der Aussparung 28 und an dem anderen Ende mit einem Schlauch 46 kommuniziert. Der Kanal 44 wird durch einen Graben gebildet, der in die Platte 26 gefräst ist. Beiderseits des Grabens ist die Dicke der Platte 26 etwas reduziert. In diesen Bereich reduzierter Dicke ist eine weitere, dünnere Platte 48 gesetzt, die bündig mit der Oberfläche der Platte 26 abschließt und den Graben bedeckt, um den Kanal 44 nach oben abzuschließen. Die Platte 48 ist in Fig. 16 der Deutlichkeit halber ein weiteres Mal unter 48' in einer Seitenansicht und unter 48" in einer Draufsicht dargestellt.

Die Vorrichtung 12 ist in der gezeigten Ausführungsform als Adapter ausgebildet, der auf eine Vielzahl handelsüblicher Objektive aufgesetzt werden kann. In der gezeigten Ausführungsform ist die Unterseite der Platte 26 auf dem äußeren Rand des Ringes 30 festgeklebt, um die Vorrichtung bzw. den Adapter 12 mittels des Ringes 30 an dem Objektivkopf 16 der Objektivs 10 zu befestigen.

Im Folgenden wird die Funktion der Vorrichtung 12 beschrieben. Durch eine Schlauchpumpe (nicht gezeigt) wird eine Immersionsflüssigkeit, beispielsweise vollentsalztes Wasser, durch den Schlauch 46 und den Kanal 44 in der Platte 26 in die Aussparung 28 in der Platte 26 zugeführt. Dadurch wird die Aussparung 28 mit der Immersionsflüssigkeit gefüllt. Im Betrieb des Mikroskops ist gegenüber der Linse 20, d.h., in den Darstellungen von Fig. 16 und 17 oberhalb des Objektivkopfs 16 ein Probenträger (nicht gezeigt) angeordnet, der die mit dem Mikroskop zu untersuchenden Proben enthält. Der Fokus des Objektivs 10 liegt etwa 0,2 mm oberhalb der Linse 20, und in diesem sehr geringen Abstand ist im Betrieb auch der Probenträger (in den Figuren nicht gezeigt) angeordnet. Die in die Aussparung 28 eingeführte Immersionsflüssigkeit füllt aufgrund der Adhäsionskräfte den Spalt zwischen der Linse 20 und dem Probenträger (nicht gezeigt). Das heißt, es bildet sich ein Immersionsfilm zwischen der Linse 20 (und einem diese umgebenden Teil der inneren konischen Fläche 18) und dem Probenträger (nicht gezeigt) aus.

Im Betrieb kann der Probenträger (nicht gezeigt) relativ zum Objektiv 10 bewegt werden, beispielsweise um eine Vielzahl von Proben automatisch abzuscannen. Die Aussparung 28 hilft dabei, den Immersionsfilm trotz dieser Relativbewegung im Bereich der Linse 20 zu halten. Dennoch geht bei der Relativbewegung ein Teil der Immersionsflüssigkeit aus der direkten Umgebung der Linse 20 verloren. Außerdem kann die Immersionsflüssigkeit bei Langzeituntersuchungen, die beispielsweise an lebenden Zellen vorgenommen werden, trocknen.

Um sicherzustellen, dass stets genug Immersionsflüssigkeit vorhanden ist, wird in der gezeigten Ausführungsform eine elektrische Spannung, insbesondere eine Wechselspannung zwischen den Elektroden 32 und 34 angelegt, und mit Hilfe einer nicht näher beschriebenen Elektronik wird die Leitfähigkeit des Immersionsfilms zwischen den Elektroden 32, 34, d.h., des Immersionsfilms in der Aussparung 28, gemessen. Man beachte, dass der Immersionsfilm nicht auf die Aussparung 28 beschränkt ist, sondern sich durch Kapillarkräfte auch über diesen hinaus ausbilden kann. Auch muss nicht die gesamte Aussparung 28 zu jeder Zeit vollständig mit dem Immersionsfilm gefüllt sein. Jedoch bildet die Aussparung 28 einen Immersionsfilmbereich, in dem der Immersionsfilm ausgebildet werden soll und in dem seine Beschaffenheit durch die oben beschriebene Leitfähigkeitsmessung kontrolliert wird.

Wenn der Immersionsfilm in der Aussparung 28 dünn wird oder beginnt einzureißen, wird dies detektiert, indem sich der Widerstand zwischen den Elektroden 32, 34 erhöht bzw. die Leitfähigkeit des Immersionsfilms im Immersionsfilmbereich abnimmt. Sobald die Leitfähigkeit des Immersionsfilms einen unteren Schwellenwert unterschreitet, wird ein Signal an die Schlauchpumpe (nicht gezeigt) gesendet, woraufhin diese weitere Immersionsflüssigkeit durch den Schlauch 46 und den Kanal 44 in die Aussparung 28 in der Platte 26 nachliefert. Diese Zufuhr der Immersionsflüssigkeit wird beendet, sobald die Leitfähigkeit des Immersionsfilms zwischen den Elektroden 32 und 34 einen oberen Schwellenwert übersteigt. Alternativ kann die Schlauchpumpe auch so gesteuert werden, dass sie ohne einen oberen Schwellenwert der Leitfähigkeit zu überwachen nach dem Einschalten stets für eine gewisse Zeit fördert, die bemessen ist, um eine ausreichende Menge von Immersionsflüssigkeit nachzuliefern.

Die Elektroden 32, 34, die Leitungen 36, 38 und die Elektronik zum Bestimmen der Leitfähigkeit des Immersionsfilms bilden eine Ausführungsform der eingangs genannten Sensoreinrichtung, die geeignet ist, die Beschaffenheit des Immersionsfilms zu detektieren. Falls die Immersionsflüssigkeit nicht leitend ist, könnte in einer alternativen Ausführungsform an den Elektroden 32 und 34 ein Wechselfeld erzeugt werden, indem eine elektrische Wechselspannung angelegt wird. Dabei wirken die Elektroden 32, 34 als "Platten" eines Kondensators, die mit einem Schwingkreis gekoppelt werden könnten. Bei einem dielektrischen Immersionsmedium würde sich die Kapazität dieses Kondensators in Abhängigkeit von der Dicke des Immersionsfilms ändern, und somit die Resonanzfrequenz des Schwingkreises. Somit könnte die Beschaffenheit des Immersionsfilms basierend auf einer kapazitiven Wirkung desselben detektiert werden.

In einer alternativen Ausführungsform kann das Vorhandensein eines ausreichenden Immersionsfilm durch ein kalorimetrisches Messverfahren überprüft werden. Bei diesem Verfahren wird die unterschiedliche Wärmeleitfähigkeit des den Sensor umgebenden Mediums ausgenutzt. Hierzu wird beispielsweise ein temperaturabhängiger Widerstand, wie ein PTC- oder NTC-Widerstand, als Sensor verwendet, der im Immersionsfilmbereich angeordnet ist. An den Sensor wird ein Strom angelegt, so dass sich der Sensor aufheizt. Abhängig davon, ob der Sensor in dem Immersionsfilm zu liegen kommt und somit durch die Immersionsflüssigkeit gekühlt wird oder nicht, wird sich der Sensor weniger stark oder stärker aufheizen, wodurch sich der Widerstandswert des Sensors entsprechend ändert. Durch Erfassen des Widerstandswertes des Sensors kann somit erkannt werden, ob ein ausreichender Immersionsfilm vorhanden ist.

In einer vorteilhaften Weiterbildung kann die Pumprichtung der Schlauchpumpe (nicht gezeigt) umgekehrt werden, so dass Immersionsflüssigkeit aus der Aussparung 28 durch den Kanal 44 und den Schlauch 46 abgesaugt werden kann. Dies ist insbesondere dann vorteilhaft, wenn das Objektiv 10 vom Probenträger (nicht gezeigt) entfernt wird, beispielsweise um das Objektiv zu wechseln oder eine neue Probe zu untersuchen, weil dann die nicht mehr benötigte Immersionsflüssigkeit das Mikroskop nicht verschmutzt.

## Patentansprüche

1. Verfahren zum Betreiben eines Immersionsobjektivs zur mikroskopischen Untersuchung eines Objekts, wobei mit einer Zuführeinrichtung (6) Immersionsflüssigkeit in den Bereich zwischen dem Objekt bzw. einem Objektträger (1) und der äußeren Linse (3) des Objektivs zugeführt und abgeführt wird, wobei die Zuführeinrichtung (6) eine den Objektivkörper (4) umschließende, im Bereich der äußeren Linse (3) offene Kappe (8) umfasst, die zur äußeren Linse (3) hin einen Spalt (9) bildet, wobei innerhalb der Kappe (8) ein Raum zur Aufnahme von Immersionsflüssigkeit (7) gebildet ist und wobei die Immersionsflüssigkeit (7) über den Spalt (9) austritt, wobei die Zuführeinrichtung (6) zwei an der Kappe (8) ausgebildete Anschlüsse (10) zur ständigen Versorgung mit Immersionsflüssigkeit (7) aufweist,
**dadurch gekennzeichnet, dass** über jeden der Anschlüsse (10) dieselbe Immersionsflüssigkeit (7) oder unterschiedliche Immersionsflüssigkeiten (7) ein- und ausgeleitet werden, und dass über die Anschlüsse (10) Unterdruck oder Überdruck ausgeübt wird, so dass Immersionsflüssigkeit gezielt und definiert in den Bereich der äußeren Linse (3) durch den Spalt (9) gefördert oder aber aus diesem Bereich durch den Spalt (9) zurückgezogen wird.

2. Verfahren nach Anspruch 1, **dadurch gekennzeichnet, dass** in die Kappe (8) und/ oder in den Objektivkörper (4) Kanäle (23) zur Leitung von Immersionsflüssigkeit (7) eingearbeitet sind.

3. Verfahren nach Anspruch 1 oder 2, **dadurch gekennzeichnet, dass** die Kappe (8) an einem vorderen, im Querschnitt breiteren Bereich des Objektivkörpers (4) abdichtend befestigt ist.

4. Verfahren nach einem der Ansprüche 1 bis 3, **dadurch gekennzeichnet, dass** die Kappe (8) mit einem Verbindungsbereich (11) an dem Objektivkörper (4) befestigt ist.

5. Verfahren nach einem der Ansprüche 1 bis 4, **dadurch gekennzeichnet, dass** der Spalt (9) durch Positionierung der Kappe (8) einstellbar ist.

6. Verfahren nach einem der Ansprüche 1 bis 5, **dadurch gekennzeichnet, dass** der Verbindungsbereich (11) als massiver Ring ausgeführt ist.

7. Verfahren nach einem der Ansprüche 1 bis 6, **dadurch gekennzeichnet, dass** die Anschlüsse (10) über eine Leitung, insbesondere über einen Schlauch, mit einem Immersionsflüssigkeit (7) enthaltenden Reservoir (21) verbunden sind.

8. Verfahren nach einem der Ansprüche 1 bis 7, **dadurch gekennzeichnet, dass** eine Heizeinrichtung zum Erwärmen der Immersionsflüssigkeit (7) und/oder einer Spül-/ Reinigungsflüssigkeit vorgesehen ist.

9. Verfahren nach einem der Ansprüche 1 bis 8, **dadurch gekennzeichnet, dass** die Immersionsflüssigkeit (7) mit Schallwellen beaufschlagbar ist.

## Claims

1. Method for using an immersion objective for the microscopic examination of a specimen, immersion liquid being fed into and removed from the region between the specimen or a specimen slide (1) and the external lens (3) of the objective by means of a feeding device (6), the feeding device (6) comprising a cap (8) which surrounds the objective body (4), is open in the region of the external lens (3) and forms a gap (9) towards the external lens (3), a space for receiving immersion liquid (7) being formed within the cap (8) and the immersion liquid (7) being discharged through the gap (9), the feeding device (6) having two connections (10) on the cap (8) for continuously supplying immersion liquid (7), **characterised in that** the same immersion liquid (7) or different immersion liquids (7) are conveyed in and out via each of the connections (10) and **in that** negative pressure or overpressure is exerted via the connections (10) in order to deliver immersion liquid into the region of the external lens (3) through the gap (9) in a controlled and defined manner or to withdraw immersion liquid from this region through the gap (9).

2. Method according to claim 1, **characterised in that** channels (23) for conveying immersion liquid (7) are made in the cap (8) and/or in the objective body (4).

3. Method according to either claim 1 or claim 2, **characterised in that** the cap (8) is sealingly attached to a front region of the objective body (4) which has a wider cross section.

4. Method according to any one of claims 1 to 3, **characterised in that** the cap (8) is attached to the objective body (4) by means of a connecting region (11).

5. Method according to any one of claims 1 to 4, **characterised in that** the gap (9) can be adjusted by positioning the cap (8).

6. Method according to any one of claims 1 to 5, **characterised in that** the connecting region (11) is designed as a solid ring.

7. Method according to any one of claims 1 to 6, **characterised in that** the connections (10) are connected to a reservoir (21) containing immersion liquid (7) by means of a line, in particular by means of a tube.

8. Method according to any one of claims 1 to 7, **characterised in that** a heating device for heating the immersion liquid (7) and/or a rinsing or cleaning liquid is provided.

9. Method according to any one of claims 1 to 8, **characterised in that** the immersion liquid (7) can be acted upon by sound waves.

## Revendications

1. Procédé pour l'exploitation d'un objectif d'immersion pour l'examen microscopique d'un objet, moyennant quoi, avec un dispositif d'introduction (6), un liquide d'immersion est introduit et évacué de la zone entre l'objet ou un support d'objet (1) et la lentille externe (3) de l'objectif, le dispositif d'introduction (6) comprenant un capuchon (8) ouvert au niveau de la lentille externe (3), entourant le corps de l'objectif (4), qui forme, en direction de la lentille externe (3), un interstice (9), un espace pour le logement du liquide d'immersion (7) étant formé à l'intérieur du capuchon (8) et le liquide d'immersion (7) sortant par l'interstice (9), le dispositif d'introduction (6) comprenant trois raccords (10) réalisés sur le capuchon (8), pour une alimentation continue en liquide d'immersion (7),
**caractérisé en ce que**
par l'intermédiaire de chacun des raccords (10), le même liquide d'immersion (7) ou différents liquides d'immersion (7) sont introduits et évacués et **en ce que**, par l'intermédiaire des raccords (10), une dépression ou une surpression est appliquée, de façon à ce que le liquide d'immersion soit transporté de manière ciblée et définie vers la zone de la lentille externe (3) à travers l'interstice (9) ou évacué hors de cette zone à travers l'interstice (9).

2. Procédé selon la revendication 1, **caractérisé en ce que**, dans le capuchon (8) et/ou dans le corps de l'objectif (4) sont réalisés des canaux (23) pour le guidage d'un liquide d'immersion (7).

3. Procédé selon la revendication 1 ou 2, **caractérisé en ce que** le capuchon (8) est fixé de manière étanche au niveau d'une zone frontale, de section plus large, du corps de l'objectif (4).

4. Procédé selon l'une des revendications 1 à 3, **caractérisé en ce que** le capuchon (8) est fixé avec une zone de liaison (11) au corps de l'objectif (4).

5. Procédé selon l'une des revendications 1 à 4, **caractérisé en ce que** l'interstice (9) peut être réglé par le positionnement du capuchon (8).

6. Procédé selon l'une des revendications 1 à 5, **caractérisé en ce que** la zone de liaison (11) est réalisée sous la forme d'un anneau massif.

7. Procédé selon l'une des revendications 1 à 6, **caractérisé en ce que** les raccords (10) sont reliés par l'intermédiaire d'une conduite, plus particulièrement d'un tuyau, avec un réservoir (21) contenant un liquide d'immersion (7).

8. Procédé selon l'une des revendications 1 à 7, **caractérisé en ce qu'**un dispositif de chauffage est prévu pour le chauffage du liquide d'immersion (7) et/ou d'un liquide de rinçage/nettoyage.

9. Procédé selon l'une des revendications 1 à 8, **caractérisé en ce que** le liquide d'immersion (7) peut être soumis à des ondes sonores.
